(19) Europäisches Patentamt European Patent Office Office européen des brevets

(11) **EP 3 828 765 A1**

(12) **EUROPEAN PATENT APPLICATION**
published in accordance with Art. 153(4) EPC

(43) Date of publication:
**02.06.2021 Bulletin 2021/22**

(21) Application number: **20853555.9**

(22) Date of filing: **29.04.2020**

(51) Int Cl.:
*G06K 9/00* (2006.01)          *G06K 9/62* (2006.01)
*G06N 3/04* (2006.01)          *G06N 3/08* (2006.01)

(86) International application number:
**PCT/CN2020/087826**

(87) International publication number:
**WO 2021/057027 (01.04.2021 Gazette 2021/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **27.09.2019 CN 201910926373**

(71) Applicant: **Beijing Sensetime Technology Development Co., Ltd.**
**Haidian Beijing 100080 (CN)**

(72) Inventors:
• **DUAN, Haodong**
  **Beijing 100080 (CN)**
• **LIU, Wentao**
  **Beijing 100080 (CN)**

(74) Representative: **Lavoix**
**Bayerstraße 83**
**80335 München (DE)**

(54) **HUMAN BODY DETECTION METHOD AND APPARATUS, COMPUTER DEVICE, AND STORAGE MEDIUM**

(57)     A human detection method and apparatus, a computer device and a storage medium are provided. The method includes that: an image to be detected is acquired; position information of skeletal key points configured to represent a human skeletal structure and position information of contour key points configured to represent a human contour are determined based on the image to be detected; and a human detection result is generated based on the position information of the skeletal key points and the position information of the contour key points.

FIG. 1

EP 3 828 765 A1

**Description**

TECHNICAL FIELD

The disclosure relates to the technical field of image processing, and particularly to a human detection method and apparatus, a computer device and a storage medium.

BACKGROUND

Along with the application of neural networks to the fields of images, videos, voices, texts and the like, requirements of users on the accuracy of various neural-network-based models have increased. Human detection in an image is an important application scenario of the neural network, and requirements on the accuracy and calculated data volume of human detection are relatively high.

SUMMARY

Embodiments of the disclosure aim at providing a human detection method and apparatus, a computer device and a storage medium.

According to a first aspect, the embodiments of the disclosure provide a human detection method, which may include that: an image to be detected is acquired; position information of skeletal key points configured to represent a human skeletal structure and position information of contour key points configured to represent a human contour are determined based on the image to be detected; and a human detection result is generated based on the position information of the skeletal key points and the position information of the contour key points.

In the embodiments of the disclosure, the position information of the skeletal key points configured to represent the human skeletal structure and the position information of the contour key points configured to represent the human contour may be determined from the image to be detected, and the human detection result may be generated based on the position information of the skeletal key points and the position information of the contour key points, so that the representation accuracy is improved, and meanwhile, the calculated data volume is considered.

In addition, in the implementation mode of the disclosure, the human detection result is obtained by use of the position information of the skeletal key points representing the human skeletal structure and the position information of the contour key points representing the human contour, so that information representing a human body is richer, and application scenarios are more extensive, for example, image edition and human body shape changing.

In an optional implementation mode, the contour key points may include main contour key points and auxiliary contour key points, and there may be at least one auxiliary contour key point between adjacent two of the main contour key points.

In the implementation mode, the human contour is represented through position information of the main contour key points and position information of the auxiliary contour key points, so that the human contour may be identified more accurately, and the information amount is larger.

In an optional implementation mode, the operation that the position information of the contour key points configured to represent the human contour is determined based on the image to be detected may include that: position information of the main contour key points is determined based on the image to be detected; human contour information is determined based on the position information of the main contour key points; and position information of multiple auxiliary contour key points is determined based on the determined human contour information.

In the implementation mode, the position information of the main contour key points and the position information of the auxiliary contour key points may be determined more accurately.

In an optional implementation mode, the human detection result may include at least one of: the image to be detected added with skeletal key point tags and contour key point tags, or a data set including the position information of the skeletal key points and the position information of the contour key points.

In the implementation mode, the image to be detected including the skeletal key point tags and the contour key point tags may present a more direct visual impression, and the data set including the position information of the skeletal key points and the position information of the contour key points is more favorable for subsequent processing.

In an optional implementation mode, the method may further include that: at least one of the following operations are executed based on the human detection result: human action recognition, human pose detection, human contour regulation, human body image edition or human body mapping.

In the implementation mode, more operations may be implemented more accurately and rapidly based on the human detection result with higher representation accuracy and a smaller calculated data volume.

In an optional implementation mode, the operation that the position information of the skeletal key points configured to represent the human skeletal structure and the position information of the contour key points configured to represent the human contour are determined based on the image to be detected may include that: feature extraction is performed based on the image to be detected to obtain a skeletal feature and a contour feature, and feature fusion is performed on the obtained skeletal feature and contour feature; and the position information of the skeletal key points and the position information of the contour key points are determined based on a feature fusion result.

In the implementation mode, feature extraction may be performed on the image to be detected to obtain the skeletal feature and the contour feature, and feature fusion may be performed on the obtained skeletal feature and contour feature to further obtain the position information of the skeletal key points configured to represent the human skeletal structure and the position information of the contour key points configured to represent the human contour. The human detection result obtained based on this method may represent a human body with a smaller data volume, the skeletal feature and contour feature of the human body are also extracted to represent the human body, and improvement for the representation accuracy is considered at the same time.

In an optional implementation mode, the operation that feature extraction is performed based on the image to be detected to obtain the skeletal feature and the contour feature and feature fusion is performed on the obtained skeletal feature and contour feature may include that: at least one time of feature extraction is performed based on the image to be detected, and feature fusion is performed on a skeletal feature and contour feature obtained by each time of feature extraction, the (i+1)th time of feature extraction being performed based on a feature fusion result of the ith time of feature fusion under the condition that multiple feature extractions are performed and i being a positive integer; and the operation that the position information of the skeletal key points configured to represent the human skeletal structure and the position information of the contour key points configured to represent the human contour are determined based on the feature fusion result may include that: the position information of the skeletal key points and the position information of the contour key point are determined based on a feature fusion result of the last feature fusion.

In the implementation mode, at least one time of feature extraction is performed on the image to be detected, and feature fusion is performed on the skeletal feature and contour feature obtained by each time of feature extraction, so that skeletal feature points and contour feature points having a position correlation may be mutually corrected, and the finally obtained position information of the skeletal key points and position information of the contour key points are higher in accuracy.

In an optional implementation mode, the operation that at least one time of feature extraction is performed based on the image to be detected may include that: in the first time of feature extraction, a first target skeletal feature matrix of the skeletal key points configured to represent the human skeletal feature and a first target contour feature matrix of the contour key points configured to represent the human contour feature are extracted from the image to be detected by use of a first feature extraction network which is pre-trained; and in the (i+1)th time of feature extraction, the first target skeletal feature matrix of the skeletal key points configured to represent the human skeletal feature and the first target contour feature matrix of the contour key points configured to represent the human contour feature are extracted from the feature fusion result of the ith time of feature fusion by use of a second feature extraction network which is pre-trained, network parameters of the first feature extraction network and the second feature extraction network being different and network parameters of the second feature extraction network for different times of feature extraction being different.

In the embodiment, at least one time of extraction and at least one time of fusion are performed on the skeletal feature and the contour feature, and the finally obtained position information of the skeletal key points and position information of the contour key points are higher in accuracy.

In an optional implementation mode, the operation that feature fusion is performed on the obtained skeletal feature and contour feature may include that: feature fusion is performed on the first target skeletal feature matrix and the first target contour feature matrix by use of a feature fusion neural network which is pre-trained to obtain a second target skeletal feature matrix and a second target contour feature matrix. The second target skeletal feature matrix may be a three-dimensional skeletal feature matrix, the three-dimensional skeletal feature matrix may include two-dimensional skeletal feature matrices respectively corresponding to all skeletal key points, and a value of each element in the two-dimensional skeletal feature matrix may represent a probability that a pixel corresponding to the element is the corresponding skeletal key point. The second target contour feature matrix may be a three-dimensional contour feature matrix, the three-dimensional contour feature matrix may include two-dimensional contour feature matrices respectively corresponding to all contour key points, and a value of each element in the two-dimensional contour feature matrix may represent a probability that a pixel corresponding to the element is to the corresponding contour key point. Network parameters of the feature fusion neural network for different time of feature fusions may be different.

In the implementation mode, the skeletal feature and the contour feature are fused based on the pre-trained feature fusion network, so that a better feature fusion result may be obtained, and the finally obtained position information of the skeletal key points and position information of the contour key points are higher in accuracy.

In an optional implementation mode, the operation that the position information of the skeletal key points and the position information of the contour key points are determined based on the feature fusion result of the last time of feature fusion may include that: the position information of the skeletal key points is determined based on the second target skeletal feature matrix obtained by the last time feature fusion; and the position information of the contour key points is determined based on the second target contour feature matrix obtained by the last time of feature fusion.

In the implementation mode, by at least one time of feature extraction and feature fusion, the finally obtained position information of the skeletal key points and position information of the contour key points are higher in accuracy.

In an optional implementation mode, the first feature extraction network may include a common feature extraction network, a first skeletal feature extraction network and a first contour feature extraction network, and the operation that the first target skeletal feature matrix of the skeletal key points configured to represent the human skeletal feature and the first target contour feature matrix of the contour key points configured to represent the human contour feature are extracted from the image to be detected by use of the first feature extraction network may include that: convolution processing is performed on the image to be detected by use of the common feature extraction network to obtain a basic feature matrix including the skeletal feature and the contour feature; convolution processing is performed on the basic feature matrix by use of the first skeletal feature extraction network to obtain a first skeletal feature matrix, a second skeletal feature matrix is acquired from a first target convolutional layer in the first skeletal feature extraction network, and the first target skeletal feature matrix is obtained based on the first skeletal feature matrix and the second skeletal feature matrix, the first target convolutional layer being any other convolutional layer, except a last convolutional layer, in the first skeletal feature extraction network; and convolution processing is performed on the basic feature matrix by use of the first contour feature extraction network to obtain a first contour feature matrix, a second contour feature matrix is acquired from a second target convolutional layer in the first contour feature extraction network, and the first target contour feature matrix is obtained based on the first contour feature matrix and the second contour feature matrix, the second target convolutional layer being any other convolutional layer, except a last convolutional layer, in the first contour feature extraction network.

In the implementation mode, the skeletal feature and the contour feature are extracted by use of the common feature extraction network to remove other features except the skeletal feature and the contour feature in the image to be detected, then targeted extraction is performed on the skeletal feature by use of the first skeletal feature extraction network, and targeted extraction is performed on the contour feature by use of the first contour feature extraction network, so that fewer calculations are required.

In an optional implementation mode, the operation that the first target skeletal feature matrix is obtained based on the first skeletal feature matrix and the second skeletal feature matrix may include that: concatenation processing is performed on the first skeletal feature matrix and the second skeletal feature matrix to obtain a first concatenated skeletal feature matrix, and dimension transform processing is performed on the first concatenated skeletal feature matrix to obtain the first target skeletal feature matrix; and the operation that the first target contour feature matrix is obtained based on the first contour feature matrix and the second contour feature matrix may include that: concatenation processing is performed on the first contour feature matrix and the second contour feature matrix to obtain a first concatenated contour feature matrix, and dimension transform processing is performed on the first concatenated contour feature matrix to obtain the first target contour feature matrix, a dimension of the first target skeletal feature matrix being the same as a dimension of the first target contour feature matrix and the first target skeletal feature matrix and the first target contour feature matrix being the same in dimensionality in a same dimension.

In the implementation mode, concatenation processing is performed on the first skeletal feature matrix and the second skeletal feature matrix to ensure that the first target skeletal feature matrix includes richer skeletal feature information, and meanwhile, concatenation processing is performed on the first contour feature matrix and the second contour feature matrix to ensure that the first target contour feature matrix includes richer contour feature information. Therefore, in a subsequent feature fusion process, the position information of the skeletal key points and the position information of the contour key points may be extracted more accurately.

In an optional implementation mode, the feature fusion neural network may include a first convolutional neural network, a second convolutional neural network, a first transform neural network and a second transform neural network, and the operation that feature fusion is performed on the first target skeletal feature matrix and the first target contour feature matrix by use of the feature fusion neural network to obtain the second target skeletal feature matrix and the second target contour feature matrix may include that: convolution processing is performed on the first target skeletal feature matrix by use of the first convolutional neural network to obtain a first intermediate skeletal feature matrix, and convolution processing is performed on the first target contour feature matrix by use of the second convolutional neural network to obtain a first intermediate contour feature matrix; concatenation processing is performed on the first intermediate contour feature matrix and the first target skeletal feature matrix to obtain a first concatenated feature matrix, and dimension transform is performed on the first concatenated feature matrix by use of the first transform neural network to obtain the second target skeletal feature matrix; and concatenation processing is performed on the first intermediate skeletal feature matrix and the first target contour feature matrix to obtain a second concatenated feature matrix, and dimension transform is performed on the second concatenated feature matrix by use of the second transform neural network to obtain the second target contour feature matrix.

In the implementation mode, the skeletal feature and the contour feature are fused in a manner of performing concatenation processing on the first intermediate contour feature matrix and the first target skeletal feature matrix and obtaining the second target skeletal feature matrix based on a concatenation processing result to correct the extracted skeletal feature by use of the contour feature. In addition, the skeletal feature and the contour feature are fused in a manner of performing concatenation processing on the first intermediate skeletal feature matrix and the first target contour feature matrix and obtaining the second target contour feature matrix based on a concatenation processing result to correct the extracted contour feature by use of the skeletal feature. Furthermore, the position information of the skeletal key points and the position information of the contour key points may be extracted more accurately.

In an optional implementation mode, the feature fusion neural network may include a first directional convolutional neural network, a second directional convolutional neural network, a third convolutional neural network, a fourth convolutional neural network, a third transform neural network and a fourth transform neural network, and the operation that feature fusion is performed on the first target skeletal feature matrix and the first target contour feature matrix by use of the feature fusion neural network to obtain the second target skeletal feature matrix and the second target contour feature matrix may include that: directional convolution processing is performed on the first target skeletal feature matrix by use of the first directional convolutional neural network to obtain a first directional skeletal feature matrix, and convolution processing is performed on the first directional skeletal feature matrix by use of the third convolutional neural network to obtain a second intermediate skeletal feature matrix; directional convolution processing is performed on the first target contour feature matrix by use of the second directional convolutional neural network to obtain a first directional contour feature matrix, and convolution processing is performed on the first directional contour feature matrix by use of the fourth convolutional neural network to obtain a second intermediate contour feature matrix; concatenation processing is performed on the second intermediate contour feature matrix and the first target skeletal feature matrix to obtain a third concatenated feature matrix, and dimension transform is performed on the third concatenated feature matrix by use of the third transform neural network to obtain the second target skeletal feature matrix; and concatenation processing is performed on the second intermediate skeletal feature matrix and the first target contour feature matrix to obtain a fourth concatenated feature matrix, and dimension transform is performed on the fourth concatenated feature matrix by use of the fourth transform neural network to obtain the second target contour feature matrix.

In the implementation mode, fusion processing is performed on the features in a directional convolution manner, so that the position information of the skeletal key points and the position information of the contour key points may be extracted more accurately.

In an optional implementation mode, the feature fusion neural network may include a shift estimation neural network and a fifth transform neural network, and the operation that feature fusion is performed on the first target skeletal feature matrix and the first target contour feature matrix by use of the feature fusion neural network to obtain the second target skeletal feature matrix and the second target contour feature matrix may include that: concatenation processing is performed on the first target skeletal feature matrix and the first target contour feature matrix to obtain a fifth concatenated feature matrix; the fifth concatenated feature matrix is input to the shift estimation neural network, and shift estimation is performed on multiple predetermined key point pairs to obtain shift information of a shift from one key point in each key point pair to the other key point in the key point pair; by taking each key point in each key point pair as a present key point respectively, a two-dimensional feature matrix corresponding to the paired other key point is acquired from a three-dimensional feature matrix corresponding to the other key point paired with the present key point; positional shifting is performed on elements in the two-dimensional feature matrix corresponding to the paired other key point according to the shift information of the shift from the paired other key point to the present key point to obtain a shift feature matrix corresponding to the present key point; for each skeletal key point, concatenation processing is performed on a two-dimensional feature matrix corresponding to the skeletal key point and each corresponding shift feature matrix to obtain a concatenated two-dimensional feature matrix of the skeletal key point, the concatenated two-dimensional feature matrix of the skeletal key point is input to the fifth transform neural network to obtain a target two-dimensional feature matrix corresponding to the skeletal key point, and the second target skeletal feature matrix is generated based on the target two-dimensional feature matrices respectively corresponding to all skeletal key points; and for each contour key point, concatenation processing is performed on a two-dimensional feature matrix corresponding to the contour key point and each corresponding shift feature matrix to obtain a concatenated two-dimensional feature matrix of the contour key point, the concatenated two-dimensional feature matrix of the contour key point is input to the fifth transform neural network to obtain a target two-dimensional feature matrix corresponding to the contour key point, and the second target contour feature matrix is generated based on the target two-dimensional feature matrices respectively corresponding to all contour key point.

In the implementation mode, feature fusion is implemented in a manner of performing shift transformation on the skeletal key points and the contour key points, so that the position information of the skeletal key points and the position information of the contour key points may be extracted more accurately.

In an optional implementation mode, the human detection method may be implemented through a human detection model; the human detection model may include the first feature extraction network and/or the feature fusion neural network; and the human detection model may be obtained by training through sample images in a training sample set, the sample images being tagged with practical position information of the skeletal key points of the human skeletal structure and practical position information of the contour key points of the human contour.

In the implementation mode, the human detection model obtained by such a training method is higher in detection accuracy, and the human detection result considering both the representation accuracy and the calculated data volume may be obtained through the human detection model.

According to a second aspect, the embodiments of the disclosure also provide a human detection apparatus, which may include: an acquisition module, configured to acquire an image to be detected; a detection module, configured to determine position information of skeletal key points configured to represent a human skeletal structure and position information of contour key poin configured to represent a human contour based on the image to be detected; and a generation module, configured to generate a human detection result based on the position information of the skeletal key points and the position information of the contour key points.

According to a third aspect, the embodiments of the disclosure also provide a computer device, which may include a processor, a non-transitory storage medium and a bus. The non-transitory storage medium may store machine-readable instructions executable for the processor. Under the condition that the computer device runs, the processor may communicate with the storage medium through the bus. The machine-readable instructions may be executed by the processor to execute the operations in the first aspect or any possible implementation mode of the first aspect.

According to a fourth aspect, the embodiments of the disclosure also provide a computer-readable storage medium, in which computer programs may be stored, the computer programs being operated by a processor to execute the operations in the first aspect or any possible implementation mode of the first aspect.

In the embodiments of the disclosure, the position information of the skeletal key points configured to represent the human skeletal structure and the position information of the contour key points configured to represent the human contour may be determined from the image to be detected, and the human detection result may be generated based on the position information of the skeletal key points and the position information of the contour key points, so that the representation accuracy is improved, and meanwhile, the calculated data volume is considered.

In order to make the purpose, characteristics and advantages of the disclosure clearer and easier to understand, detailed descriptions will be made below with the preferred embodiments in combination with the drawings.

BRIEF DESCRIPTION OF THE DRAWINGS

In order to describe the technical solutions of the embodiments of the disclosure more clearly, the drawings required to be used in the embodiments will be simply introduced below. It is to be understood that the following drawings only illustrate some embodiments of the disclosure for a purpose of description and are nonrestrictive. Other related drawings may further be obtained by those of ordinary skill in the art according to these drawings without creative work. The same or similar reference signs in the drawings represent the same element or equivalent elements, and a reference sign, once being defined in a drawing, is not required to be further defined and explained in the subsequent drawings.

FIG. 1 is a flowchart of a human detection method according to embodiments of the disclosure.

FIG. 2a is a position example of contour key points and skeletal key points according to embodiments of the disclosure.

FIG. 2b is a position example of main contour key points and auxiliary contour key points according to embodiments of the disclosure.

FIG. 2c is another position example of main contour key points and auxiliary contour key points according to embodiments of the disclosure.

FIG. 2d is another position example of main contour key points and auxiliary contour key points according to embodiments of the disclosure.

FIG. 3 is a structure diagram of a first feature extraction network according to embodiments of the disclosure.

FIG. 4 is a flowchart of a feature extraction method according to embodiments of the disclosure.

FIG. 5 is a structure diagram of a feature fusion network according to embodiments of the disclosure.

FIG. 6 is a flowchart of a feature fusion method according to embodiments of the disclosure.

FIG. 7 is a structure diagram of another feature fusion network according to embodiments of the disclosure.

FIG. 8 is a flowchart of another feature fusion method according to embodiments of the disclosure.

FIG. 9a is a schematic diagram of a processing of implementing iterative updating by use of a scattering convolution operator according to embodiments of the disclosure.

FIG. 9b is a schematic diagram of a processing of implementing iterative updating by use of a gathering convolution operator according to embodiments of the disclosure.

FIG. 10 is a structure diagram of another feature fusion network according to embodiments of the disclosure.

FIG. 11 is a flowchart of another feature fusion method according to embodiments of the disclosure.

FIG. 12 is an example of skeletal key points and contour key points according to embodiments of the disclosure.

FIG. 13 is a specific example of performing shift transformation on elements in a two-dimensional feature matrix according to embodiments of the disclosure.

FIG. 14 is a structure diagram of a second feature extraction network according to embodiments of the disclosure.

FIG. 15 is a schematic diagram of a human detection apparatus according to embodiments of the disclosure.

FIG. 16 is a schematic diagram of a computer device according to embodiments of the disclosure.

DETAILED DESCRIPTION

In order to make the purpose, technical solutions and advantages of the embodiments of the disclosure clearer, the technical solutions in the embodiments of the disclosure will be clearly and completely described below in combination with the drawings in the embodiments of the disclosure. It is apparent that the described embodiments are not all embodiments but only part of embodiments of the disclosure. Components, described and shown in the drawings, of the embodiments of the disclosure may usually be arranged and designed with various configurations. Therefore, the following detailed descriptions about the embodiments of the disclosure provided in combination with the drawings are not intended to limit the claimed scope of the disclosure but only represent the embodiments of the disclosure. All other embodiments obtained by those skilled in the art based the embodiments of the disclosure without creative work shall fall within the scope of protection of the disclosure.

It is found by researches that the following two manners are usually adopted for human detection: a skeletal key point detection method and a semantic segmentation method.

The skeletal key point detection method: in the method, skeletal key points of a human body are extracted from an image through a neural network model, and a corresponding human detection result is obtained based on the skeletal key points. In the human detection method, a simple human body representation method is adopted, and the data volume is smaller, so that relatively few calculations are required when other subsequent processing is performed based on the human detection result obtained by the method. The method is applied more to the fields of human pose, action recognition and the like. For example, the fields of behavior detection, human-pose-based human-computer interaction, and the like. However, in the method, contour information of the human body may not be extracted, and consequently, the obtained human detection result is low in representation accuracy.

The semantic segmentation method: in the method, a probability that each pixel in an image belongs to a human body is recognized through a semantic segmentation model, and a human detection result is obtained based on the probability that each pixel in the image belongs to the human body. In the human detection method, complete contour information of the human body may be obtained, but the calculated data volume of the human recognition result is relatively large.

Therefore, how to implement human detection with both the representation accuracy and the calculated data volume considered becomes a problem urgent to be solved at present.

Based on the above researches, the disclosure provides a human detection method and apparatus, a computer device and a storage medium. Feature extraction may be performed on an image to be detected to obtain a skeletal feature and contour feature of a human body, and feature fusion may be performed on the extracted skeletal feature and contour feature to further obtain position information of skeletal key points configured to represent a human skeletal structure and position information of contour key points configured to represent a human contour. A human detection result obtained based on this method has a smaller data volume and reflects the skeletal feature and contour feature of the human body, and the representation accuracy is also improved at the same time.

In addition, in the embodiments of the disclosure, the human detection result is obtained by use of the position information of the skeletal key points representing the human skeletal structure and the position information of the contour key points representing the human contour, so that information representing the human body is richer, and application scenarios are more extensive.

For the shortcoming of an existing human detection manner, repeated practices and careful researches are required for determination, so that a process of finding the existing problem and the solutions disclosed in the disclosure shall fall within the scope of the disclosure.

A human detection method according to the embodiments of the disclosure will be introduced below in detail. The human detection method may be applied to any device with a data processing capability, for example, a computer.

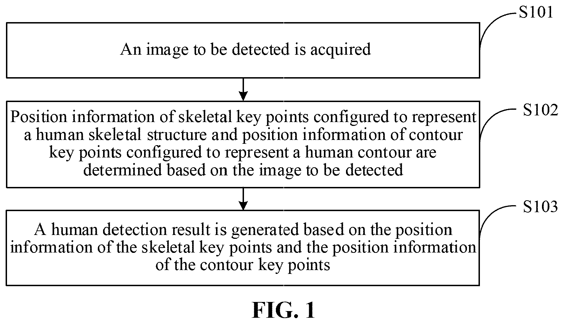

Referring to FIG. 1, a flowchart of a human detection method provided in embodiments of the disclosure is shown.

In S101, an image to be detected is acquired.

In S102, position information of skeletal key points configured to represent a human skeletal structure and position information of contour key points configured to represent a human contour are determined based on the image to be detected.

In S103, a human detection result is generated based on the position information of the skeletal key points and the position information of the contour key points.

S101 to S103 will be described below respectively.

I: in S101, the image to be detected may be, for example, an image to be detected shot by a camera mounted at a target position, an image to be detected sent by another computer device, or an image to be detected which is pre-stored and read from a local database. The image to be detected may include a human body image and may also not include the human body image. If the image to be detected includes the human body image, a final human detection result may be obtained based on the human detection method provided in the embodiments of the disclosure. If the image to be detected does not include the human body image, the obtained human detection result is, for example, null.

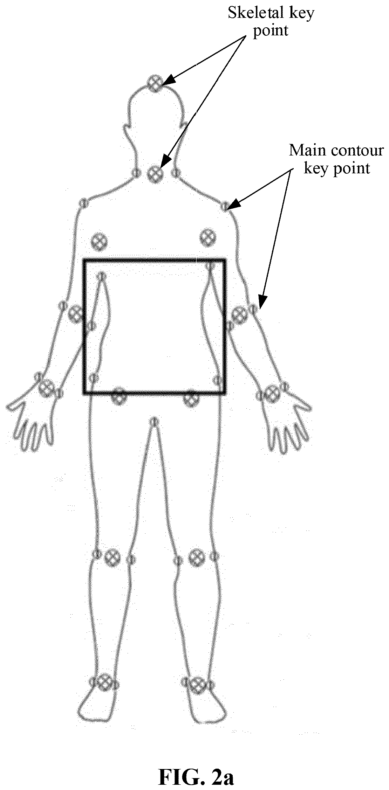

II: in S102, as shown in FIG. 2a, the skeletal key points may be configured to represent a skeletal feature of a human body, and the skeletal feature includes a feature of a joint of the human body. The joint is, for example, an elbow joint, a wrist joint, a shoulder joint, a neck joint, a crotch joint, a knee joint and an ankle joint. Exemplarily, skeletal key points may also be set at the head of the human body.

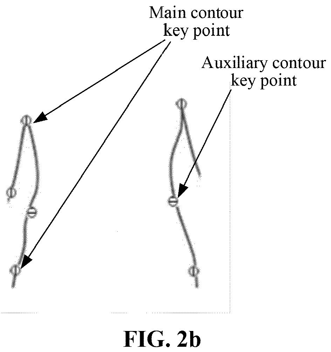

The contour key points may be configured to represent a contour feature of the human body, and may include main contour key points, as shown in FIG. 2a, or include the main contour key points and auxiliary contour key points, as shown in FIG. 2b to FIG. 2d. FIG. 2b to FIG. 2d are partial diagrams of a part in the box in FIG. 2a.

The main contour key points are contour key points representing a contour of a joint part of the human body, as shown in FIG. 2a, for example, a contour of the elbow joint, a contour of a wrist joint, a contour of the shoulder joint, a contour of the neck joint, a contour of the crotch joint, a contour of the knee joint and a contour of the ankle joint, and usually appears correspondingly to skeletal key points representing the corresponding joint part.

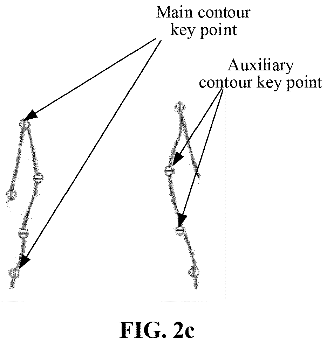

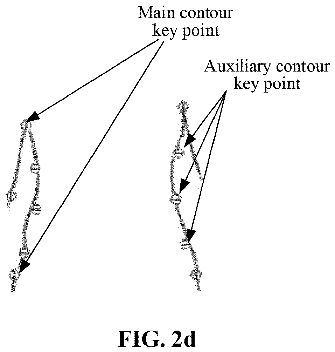

The auxiliary contour key points are contour key points representing a contour between joint parts of the human body, and there is at least one auxiliary contour key point between two adjacent main contour key points. In an example shown in FIG. 2b, there is one auxiliary contour key point between two main contour key points. In an example shown in FIG. 2c, there is two auxiliary contour key points between two main contour key points. In an example shown in FIG. 2d, there are three auxiliary contour key points between two adjacent contour key points.

The skeletal key points and contour key points involved in the above drawings and text descriptions are only examples for conveniently understanding the disclosure. During a practical application, the numbers and positions of the skeletal key points and contour key points may be properly regulated according to a practical scenario. No limits are made thereto in the disclosure.

For the condition that the contour key points include the main contour key points and the auxiliary contour key points, the position information of the contour key points configured to represent the human contour may be determined based on the image to be detected in the following manner.

Position information of the main contour key points is determined based on the image to be detected. Human contour information is determined based on the position information of the main contour key points. Position information of multiple auxiliary contour key points is determined based on the determined human contour information.

For the condition that the contour key points include the main contour key points, the position information of the main contour key points is directly determined based on the image to be detected.

The embodiments of the disclosure provide a specific method for determining the position information of the skeletal key points configured to represent the human skeletal structure and the position information of the contour key points configured to represent the human contour based on the image to be detected.

Feature extraction is performed on the image to be detected to obtain a skeletal feature and a contour feature, and feature fusion is performed on the obtained skeletal feature and contour feature. The position information of the skeletal key points and the position information of the contour key points are determined based on a feature fusion result.

The skeletal feature and the contour feature may be determined based on the image to be detected by use of, but not limited to, any one of the following A and B.

A: one time of feature extraction is performed on the image to be detected, and feature fusion is performed on the skeletal feature and contour feature obtained by the feature extraction.

B: multiple times of feature extraction are performed on the image to be detected, feature fusion is performed on a skeletal feature and contour feature obtained by each time of feature extraction after the feature extraction, and the position information of the skeletal key points and the position information of the contour key points are determined based on a feature fusion result of the last time of feature fusion.

The condition A will be specifically described below at first.

Under the condition A, the position information of the skeletal key points configured to represent the human skeletal structure and the position information of the contour key points configured to represent the human contour are determined based on a feature fusion result of the feature fusion.

A feature extraction process and a feature fusion process will be described below in a1 and a2 respectively.

al: the feature extraction process

A first target skeletal feature matrix of the skeletal key points configured to represent the human skeletal feature and a first target contour feature matrix of the contour key points configured to represent the human contour feature may be extracted from the image to be detected by use of a first feature extraction network which is pre-trained.

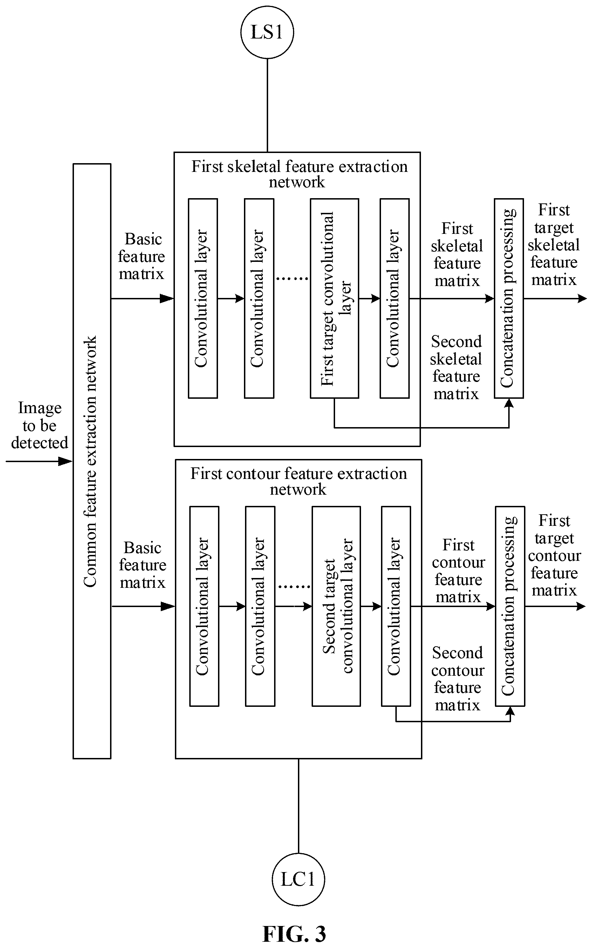

Specifically, referring to FIG. 3, the embodiments of the disclosure provides a structure diagram of the first feature extraction network. The first feature extraction network includes a common feature extraction network, a first skeletal feature extraction network and a first contour feature extraction network.

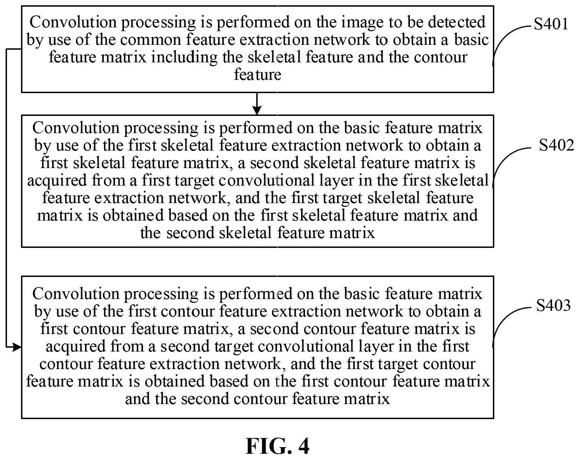

Referring to FIG. 4, the embodiments of the disclosure also provides a specific process of extracting the first target skeletal feature matrix and the first target contour feature matrix from the image to be detected based on the first feature extraction network provided in FIG. 3. The following operations are included.

In S401, convolution processing is performed on the image to be detected by use of the common feature extraction network to obtain a basic feature matrix including the skeletal feature and the contour feature.

During specific implementation, the image to be detected may be represented as an image matrix. If the image to be detected is a single-color-channel image, for example, a grayscale image, it may be represented as a two-dimensional image matrix, each element in the two-dimensional image matrix corresponds to a pixel of the image to be detected one by one, and a value of each element in the two-dimensional image matrix is a pixel value of the pixel corresponding to the element. If the image to be detected is a multi-color-channel image, for example, an image in a Red Green Blue (RGB) format, it may be represented as a three-dimensional image matrix, the three-dimensional image matrix includes three two-dimensional image matrices corresponding to different color (for example, R, G and B) channels one by one. A value of each element in any one two-dimensional image matrix is a pixel value of a pixel corresponding to the element under the corresponding color channel.

The common feature extraction network includes at least one convolutional layer. After the image matrix of the image to be detected is input to the common feature extraction network, convolution processing is performed on the image matrix of the image to be detected by use of the common feature extraction network to extract a feature in the image to be detected. Under this condition, the extracted feature includes the skeletal feature and also includes the contour feature.

In S402, convolution processing is performed on the basic feature matrix by use of the first skeletal feature extraction network to obtain a first skeletal feature matrix, a second skeletal feature matrix is acquired from a first target convolutional layer in the first skeletal feature extraction network, and the first target skeletal feature matrix is obtained based on the first skeletal feature matrix and the second skeletal feature matrix, the first target convolutional layer being any other convolutional layer, except a last convolutional layer, in the first skeletal feature extraction network.

During specific implementation, the first skeletal feature extraction network includes multiple convolutional layers. The multiple convolutional layers are sequentially connected, and an input of a next convolutional layer is an output of a previous convolutional layer. The first skeletal feature extraction network of such a structure may perform convolution processing on the basic feature matrix for many times and obtain the first skeletal feature matrix from the last convolutional layer. Herein, the first skeletal feature matrix is a three-dimensional feature matrix, the three-dimensional feature matrix includes multiple two-dimensional feature matrices, and the two-dimensional feature matrices correspond to predetermined multiple skeletal key points one by one. A value of an element in the two-dimensional feature matrix, corresponding to a certain skeletal key point, represents a probability that a pixel corresponding to the element belongs to the skeletal key point, and an element usually corresponds to multiple pixels.

In addition, although performing convolution processing on the basic feature matrix for many times through the multiple convolutional layers may extract the skeletal feature of the human body from the basic feature matrix, along with the increase of the number of convolutions, some information in the image to be detected may be lost, the information may also include related information of the skeletal feature of the human body. If excessive information in the image to be detected is lost, the finally obtained first target skeletal feature matrix of the skeletal key points configured to represent the human skeletal feature may not be accurate enough. Therefore, in the embodiments of the disclosure, the second skeletal feature matrix may further be acquired from the first target convolutional layer of the first skeletal feature extraction network, and the first target skeletal feature matrix is obtained based on the first skeletal feature matrix and the second skeletal feature matrix.

Herein, the first target convolutional layer is any other convolutional layer, except the last convolutional layer, in the first skeletal feature extraction network. In an example shown in FIG. 3, the second last convolutional layer in the first skeletal feature extraction network is selected as the first target convolutional layer.

For example, the first target skeletal feature matrix may be obtained based on the first skeletal feature matrix and the second skeletal feature matrix in the following manner.

Concatenation processing is performed on the first skeletal feature matrix and the second skeletal feature matrix to obtain a first concatenated skeletal feature matrix, and dimension transform processing is performed on the first concatenated skeletal feature matrix to obtain the first target skeletal feature matrix.

Herein, under the condition that dimension transform processing is performed on the first concatenated skeletal feature matrix, it may be input to a dimension transform neural network, and convolution processing is performed at least once on the first concatenated skeletal feature matrix by use of the dimension transform neural network to obtain the first target skeletal feature matrix.

Herein, the dimension transform neural network may fuse feature information contained in the first skeletal feature matrix and the second skeletal feature matrix, so that the obtained first target skeletal feature matrix includes richer information.

In S403, convolution processing is performed on the basic feature matrix by use of the first contour feature extraction network to obtain a first contour feature matrix, a second contour feature matrix is acquired from a second target convolutional layer in the first contour feature extraction network, and the first target contour feature matrix is obtained based on the first contour feature matrix and the second contour feature matrix, the second target convolutional layer being any other convolutional layer, except a last convolutional layer, in the first contour feature extraction network. In the example shown in FIG. 3, the second last convolutional layer in the first contour feature extraction network is selected as the second target convolutional layer.

During specific implementation, the first contour feature extraction network also includes multiple convolutional layers. The multiple convolutional layers are sequentially connected, and an input of a next convolutional layer is an output of a previous convolutional layer. The first contour feature extraction network of such a structure may perform convolution processing on the basic feature matrix for many times and obtain the first contour feature matrix from the last convolutional layer. Herein, the first contour feature matrix is a three-dimensional feature matrix, the three-dimensional feature matrix includes multiple two-dimensional feature matrices, and the two-dimensional feature matrices correspond to predetermined multiple contour key points one by one. A value of an element in the two-dimensional feature matrix, corresponding to a certain contour key point, represents a probability that a pixel corresponding to the element belongs to the contour key point, and an element usually corresponds to multiple pixels.

Herein, it is to be noted that the number of the contour key points is usually different from the number of the skeletal key points, so that the number of the two-dimensional feature matrices in the obtained first contour feature matrix may be different from the number of the two-dimensional feature matrices in the first skeletal feature matrix.

For example, if the number of the skeletal key points is 14 and the number of the contour key points is 25, the number of the two-dimensional feature matrices in the first contour feature matrix is 25, and the number of the two-dimensional feature matrices in the first skeletal feature matrix is 14.

In addition, for ensuring that the first target contour feature matrix also includes richer information, a manner similar to S402 may also be adopted. The second contour feature matrix is acquired from the second target convolutional layer in the first contour feature extraction network and then the first target contour feature matrix is obtained based on the first contour feature matrix and the second contour feature matrix.

Herein, the first target contour feature matrix is obtained based on the first contour feature matrix and the second contour feature matrix in, for example, the following manner.

Concatenation processing is performed on the first contour feature matrix and the second contour feature matrix to obtain a first concatenated contour feature matrix, and dimension transform processing is performed on the first concatenated contour feature matrix to obtain the first target contour feature matrix.

It is to be noted that, in S402 and S403, a dimension of the first target skeletal feature matrix is the same as a dimension of the first target contour feature matrix, and the first target skeletal feature matrix and the first target contour feature matrix are the same in dimensionality in the same dimension, so that subsequent feature fusion processing based on the first target skeletal feature matrix and the first target contour feature matrix is facilitated.

For example, if the dimension of the first target skeletal feature matrix is 3 and dimensionalities in each dimension are 64, 32 and 14 respectively, a dimensionality of the first target skeletal feature matrix is represented as 64*32*14, and a dimensionality of the first target contour feature matrix may also be represented as 64*32*14.

In addition, in another embodiment, the first target skeletal feature matrix and the first target contour feature matrix may also be obtained in the following manner.

Convolution processing is performed on the image to be detected by use of the common feature extraction network to obtain the basic feature matrix including the skeletal feature and the contour feature.

Convolution processing is performed on the basic feature matrix by use of the first skeletal feature extraction network to obtain the first skeletal feature matrix, and dimension transform processing is performed on the first skeletal feature matrix to obtain the first target skeletal feature matrix.

Convolution processing is performed on the basic feature matrix by use of the first contour feature extraction network to obtain the first contour feature matrix, and dimension transform processing is performed on the first contour feature matrix to obtain the first target contour feature matrix.

In this manner, the skeletal feature and contour feature of the human body may also be extracted from the image to be detected more accurately.

In addition, the first feature extraction network provided in the embodiments of the disclosure may be obtained by pre-training.

Herein, the human detection method provided in the embodiments of the disclosure is implemented through a human detection model, and the human detection model includes the first feature extraction network and/or a feature fusion neural network.

The human detection model is obtained by training through sample images in a training sample set, the sample images being tagged with practical position information of the skeletal key points of the human skeletal structure and practical position information of the contour key points of the human contour.

Specifically, for the condition that the human detection model includes the first feature extraction network, the first feature extraction network may be trained independently and may also be trained jointly with the feature fusion neural network, and independent training and joint training may also be combined.

A process of obtaining the first feature extraction network by training includes, but not limited to, the following (1) and (2).

(1) Independent training for the first feature extraction network, for example, includes the following operations.

In 1.1, multiple sample images and tagging data of each sample image are acquired, the tagging data including the practical position information of the skeletal key points of the human skeletal structure and the practical position information of the contour key points of the human contour.

In 1.2, the multiple sample images are input to a first basic feature extraction network to obtain a first sample target skeletal feature matrix and a first sample target contour feature matrix.

In 1.3, first predicted position information of the skeletal key points is determined based on the first sample target skeletal feature matrix, and first predicted position information of the contour key points is determined based on the first sample target contour feature matrix.

In 1.4, a first loss is determined based on the practical position information of the skeletal key points and the first predicted position information of the skeletal key points, and a second loss is determined based on the practical position information of the contour key points and the first predicted position information of the contour key points.

In 1.5, training of a present round is performed on the first basic feature extraction network based on the first loss and the second loss.

The first basic feature extraction network is trained for multiple rounds to obtain the first feature extraction network.

As shown in FIG. 3, the first loss is LS1 in FIG. 3, and the second loss is LC1 in FIG. 3. Training for the first basic feature extraction network is supervised based on the first loss and the second loss to obtain a first feature extraction network with relatively high accuracy.

(2) Joint training for the first feature extraction network and the feature fusion neural network, for example, includes the following operations.

In 2.1, multiple sample images and tagging data of each sample image are acquired, the tagging data including the practical position information of the skeletal key points of the human skeletal structure and the practical position information of the contour key points of the human contour.

In 2.2, the multiple sample images are input to the first basic feature extraction network to obtain a first sample target skeletal feature matrix and a first sample target contour feature matrix.

In 2.3, feature fusion is performed on the first sample target skeletal feature matrix and the first sample target contour feature matrix by use of a basic feature fusion neural network to obtain a second sample target skeletal feature matrix and a second sample target contour feature matrix.

In 2.4, second predicted position information of the skeletal key points is determined based on the second sample target skeletal feature matrix, and second predicted position information of the contour key points is determined based on the second sample target contour feature matrix.

In 2.5, a third loss is determined based on the practical position information of the skeletal key points and the second predicted position information of the skeletal key points, and a fourth loss is determined based on the practical position information of the contour key points and the second predicted position information of the contour key points.

In 2.6, training of a present round is performed on the first basic feature extraction network and the basic feature fusion neural network based on the third loss and the fourth loss.

The first basic convolutional neural network and the basic feature fusion neural network are trained for multiple rounds to obtain the first feature extraction network and the feature fusion neural network.

(3) In a process of obtaining the first feature extraction network by combining independent training and joint training, the processes in (1) and (2) may be adopted for synchronous training.

Or, the first feature extraction network may also be pre-trained through the process in (1), and joint training in (2) is performed on the first feature extraction network obtained by pre-training and the feature fusion neural network.

It is to be noted that the sample images for independent training and joint training of the first feature extraction network may be the same and may also be different.

Before joint training is performed on the first feature extraction network and the feature fusion neural network, the feature fusion neural network may also be pre-trained, and then joint training is performed on the pre-trained feature fusion neural network and the first feature extraction network.

A detailed process of independent training for the feature fusion neural network may refer to the descriptions of the embodiment shown in the following a2.

a2: the feature fusion process

After the first target skeletal feature matrix of the skeletal key points configured to represent the human skeletal feature and the first target contour feature matrix of the contour key points configured to represent the human contour feature are obtained, feature fusion processing may be performed based on the first target skeletal feature matrix and the first target contour feature matrix.

Specifically, in a process of extracting the skeletal feature and the contour feature based on the image to be detected, although the same basic feature matrix is used, the skeletal feature is extracted from the basic feature matrix through the first skeletal feature extraction network, and the contour feature is extracted from the basic feature matrix through the first contour feature extraction network. The two processes are mutually independent. However, for a same human body, there is a correlation between the skeletal feature and the contour feature. A purpose of fusing the contour feature and the skeletal feature is to utilize a mutual influence relationship between the skeletal feature and the contour feature. For example, position information of the finally extracted skeletal key points may be corrected based on the contour feature and position information of the finally extracted contour key points may be corrected based on the skeletal feature, so that more accurate position information of the skeletal key points and more accurate position information of the contour key points may be obtained to obtain a more accurate human detection result.

The embodiments of the disclosure provide a specific method for performing feature fusion on the extracted skeletal feature and contour feature, which includes that: feature fusion is performed on the first target skeletal feature matrix and the first target contour feature matrix by use of the pre-trained feature fusion neural network to obtain a second target skeletal feature matrix and a second target contour feature matrix.

The second target skeletal feature matrix is a three-dimensional skeletal feature matrix, the three-dimensional skeletal feature matrix includes two-dimensional skeletal feature matrices respectively corresponding to all skeletal key points, and a value of each element in the two-dimensional skeletal feature matrix represents a probability that a pixel corresponding to the element belongs to the corresponding skeletal key point (i.e., the skeletal key point corresponding to the two-dimensional skeletal feature matrix). The second target contour feature matrix is a three-dimensional contour feature matrix, the three-dimensional contour feature matrix includes two-dimensional contour feature matrices respectively corresponding to all contour key points, and a value of each element in the two-dimensional contour feature matrix represents a probability that a pixel corresponding to the element belongs to the corresponding contour key point.

The feature fusion neural network provided in the embodiments of the disclosure may be trained independently and may also be trained jointly with the first feature extraction network, and independent training and joint training may also be combined.

A joint training process of the feature fusion neural network and the first feature extraction network may refer to (2) and will not be elaborated herein.

For feature fusion neural networks of different structures, different training methods may be adopted under the condition of independent training. Training methods for feature fusion neural networks of different structures may refer to the following M1 to M3.

A feature fusion process of the skeletal feature and the contour feature may include, but not limited to, at least one of the following M1 to M3.

M1

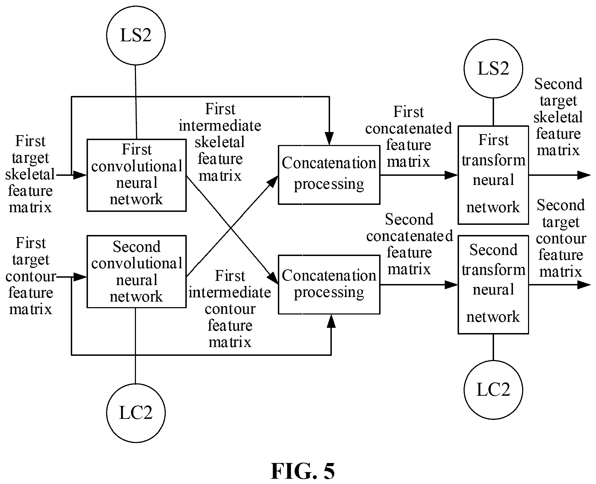

Referring to FIG. 5, the embodiment of the disclosure provides a specific structure of a feature fusion neural network, which includes a first convolutional neural network, a second convolutional neural network, a first transform neural network and a second transform neural network.

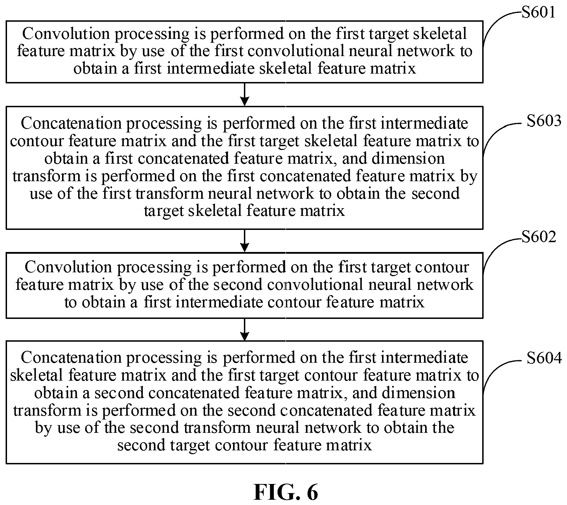

Referring to FIG. 6, the embodiment of the disclosure also provides a specific method for performing feature fusion on the first target skeletal feature matrix and the first target contour feature matrix based on the feature fusion neural network provided in FIG. 5 to obtain the second target skeletal feature matrix and the second target contour feature matrix. The following operations are included.

In S601, convolution processing is performed on the first target skeletal feature matrix by use of the first convolutional neural network to obtain a first intermediate skeletal feature matrix. S603 is executed.

Herein, the first convolutional neural network includes at least one convolutional layer. If the first convolutional neural network is multilayer, multiple convolutional layers are sequentially connected, and an input of a present convolutional layer is an output of a previous convolutional layer. The first target skeletal feature matrix is input to the first convolutional neural network, and convolution processing is performed on the first target skeletal feature matrix by use of each convolutional layer to obtain the first intermediate skeletal feature matrix.

The process is implemented to further extract the skeletal feature from the first target skeletal feature matrix.

In S602, convolution processing is performed on the first target contour feature matrix by use of the second convolutional neural network to obtain a first intermediate contour feature matrix. S604 is executed.

Herein, the processing process is similar to S601 and will not be elaborated herein.

It is to be noted that there is no execution sequence for S601 and S602. They may be executed synchronously and may also be executed asynchronously.

In S603, concatenation processing is performed on the first intermediate contour feature matrix and the first target skeletal feature matrix to obtain a first concatenated feature matrix, and dimension transform is performed on the first concatenated feature matrix by use of the first transform neural network to obtain the second target skeletal feature matrix.

Herein, concatenation processing is performed on the first intermediate contour feature matrix and the first target skeletal feature matrix to obtain the first concatenated feature matrix, so that the obtained first concatenated feature matrix not only includes the contour feature but also includes the skeletal feature.

Performing further dimension transform on the first concatenated matrix by use of the first transform neural network actually refers to extracting the skeletal feature from the first concatenated feature matrix again by use of the first transform neural network. Through the process of obtaining the first concatenated feature matrix, other features, except the skeletal feature and the contour feature, in the image to be detected are removed, and only the skeletal feature and the contour feature are included, so that the skeletal feature in the second target skeletal feature matrix obtained based on the first concatenated feature matrix may be influenced by the contour feature, the correlation between the skeletal feature and the contour feature may be established, and fusion of the skeletal feature and the contour feature may be implemented.

In S604, concatenation processing is performed on the first intermediate skeletal feature matrix and the first target contour feature matrix to obtain a second concatenated feature matrix, and dimension transform is performed on the second concatenated feature matrix by use of the second transform neural network to obtain the second target contour feature matrix.

Herein, the process of performing concatenation processing on the first intermediate skeletal feature matrix and the first target contour feature matrix to obtain the second concatenated feature matrix is similar to the process of obtaining the first concatenated feature matrix in S602 and will not be elaborated herein.

Similarly, the contour feature included in the second target contour feature matrix may be influenced by the skeletal feature, the correlation between the skeletal feature and the contour feature is established, and fusion of the skeletal feature and the contour feature is implemented.

In another embodiment, the feature fusion neural network may be trained independently in the following manner.

In 3.1, the first sample target skeletal feature matrix and first sample target contour feature matrix of the multiple sample images are acquired.

An acquisition manner is similar to the acquisition manner for the first target skeletal feature matrix and the first target contour feature matrix in the abovementioned embodiment and will not be elaborated herein. They may be acquired under the condition of training jointly with the first feature extraction network, and may also be acquired by use of the pre-trained first feature extraction network.

In 3.2, convolution processing is performed on the first sample target skeletal feature matrix by use of a first basic convolutional neural network to obtain a first sample intermediate skeletal feature matrix.

In 3.3, convolution processing is performed on the first sample target contour feature matrix by use of a second basic convolutional neural network to obtain a first sample intermediate contour feature matrix.

In S3.4, concatenation processing is performed on the first sample intermediate contour feature matrix and the first sample target skeletal feature matrix to obtain a first sample concatenated feature matrix, and dimension transform is performed on the first sample concatenated feature matrix by use of a first basic transform neural network to obtain the second sample target skeletal feature matrix.

In S3.5, concatenation processing is performed on the first sample intermediate skeletal feature matrix and the first sample target contour feature matrix to obtain a second sample concatenated feature matrix, and dimension transform is performed on the second sample concatenated feature matrix by use of a second basic transform neural network to obtain the second sample target contour feature matrix.

In 3.6, third predicted position information of the skeletal key points is determined based on the second sample target skeletal feature matrix, and third predicted position information of the contour key points is determined based on the second sample target contour feature matrix.

In 3.7, a fifth loss is determined based on the practical position information of the skeletal key points and the third predicted position information of the skeletal key points, and a sixth loss is determined based on the practical position information of the contour key points and the third predicted position information of the contour key points.

In 3.8, training of a present round is performed on the first basic convolutional neural network, the second basic convolutional neural network, the first basic transform neural network and the second basic transform neural network based on the fifth loss and the sixth loss.

The first basic convolutional neural network, the second basic convolutional neural network, the first basic transform neural network and the second basic transform neural network are trained for multiple rounds to obtain the feature fusion neural network.

Herein, the fifth loss is LS2 in FIG. 5, and the sixth loss is LC2 in FIG. 5.

M2

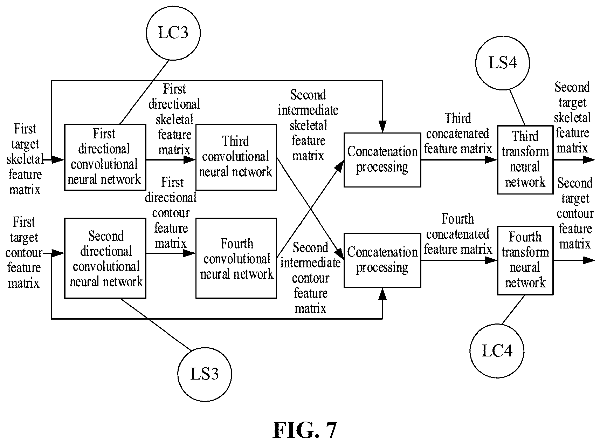

Referring to FIG. 7, a specific structure of another feature fusion neural network provided in the embodiments of the disclosure is shown, which includes a first directional convolutional neural network, a second directional convolutional neural network, a third convolutional neural network, a fourth convolutional neural network, a third transform neural network and a fourth transform neural network.

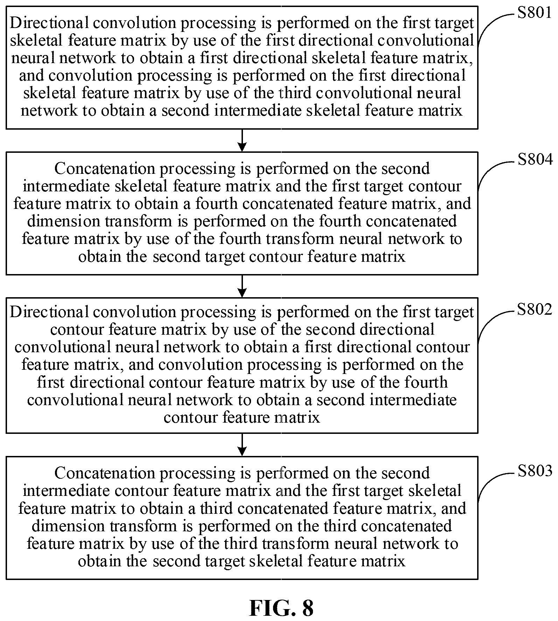

Referring to FIG. 8, the embodiments of the disclosure also provide a specific method for performing feature fusion on the first target skeletal feature matrix and the first target contour feature matrix based on the feature fusion neural network provided in FIG. 7 to obtain the second target skeletal feature matrix and the second target contour feature matrix. The following steps are included.

In S801, directional convolution processing is performed on the first target skeletal feature matrix by use of the first directional convolutional neural network to obtain a first directional skeletal feature matrix, and convolution processing is performed on the first directional skeletal feature matrix by use of the third convolutional neural network to obtain a second intermediate skeletal feature matrix. S804 is executed.

In S802, directional convolution processing is performed on the first target contour feature matrix by use of the second directional convolutional neural network to obtain a first directional contour feature matrix, and convolution processing is performed on the first directional contour feature matrix by use of the fourth convolutional neural network to obtain a second intermediate contour feature matrix. S803 is executed.

In S803, concatenation processing is performed on the second intermediate contour feature matrix and the first target skeletal feature matrix to obtain a third concatenated feature matrix, and dimension transform is performed on the third concatenated feature matrix by use of the third transform neural network to obtain the second target skeletal feature matrix.

In S804, concatenation processing is performed on the second intermediate skeletal feature matrix and the first target contour feature matrix to obtain a fourth concatenated feature matrix, and dimension transform is performed on the fourth concatenated feature matrix by use of the fourth transform neural network to obtain the second target contour feature matrix.

During specific implementation, in the feature fusion process of the skeletal feature and the contour feature, since skeletal key points are usually concentrated on a skeleton of the human body, while contour key points are concentrated on the contour of the human body, namely distributed around the skeleton, it is necessary to perform local space transform on the skeletal feature and the contour feature respectively, for example, transforming the skeletal feature to a position of the contour feature in the contour feature matrix and transforming the contour feature to a position of the skeletal feature in the skeletal feature matrix, to extract the skeletal feature and the contour feature better to implement fusion of the skeletal feature and the contour feature.

For achieving this purpose, in the embodiments of the disclosure, directional convolution processing is performed on the first target skeletal feature matrix at first by use of the first directional convolutional neural network. By directional convolution, directional space transform for the skeletal feature may be effectively implemented in a feature level. Then, convolution processing is performed on the obtained first directional skeletal feature matrix by use of the third convolutional neural network to obtain the second intermediate skeletal feature matrix. Under this condition, since directional space transform has been performed on the skeletal feature through a first directional convolutional layer, the skeletal feature actually moves towards to the direction of contour feature. Then, concatenation processing is performed on the second intermediate skeletal feature matrix and the first target contour feature matrix to obtain the fourth concatenated feature matrix. The fourth concatenated feature matrix includes the contour feature and also includes the skeletal feature subjected to directional space transform. Then, dimension transform is performed on the fourth concatenated feature matrix by use of the fourth transform neural network, namely the contour feature is extracted again from the fourth concatenated feature matrix. The second target contour feature matrix obtained in such a manner may be influenced by the skeletal feature, and fusion of the skeletal feature and the contour feature is implemented.

Similarly, in the embodiment of the disclosure, directional convolution processing is performed on the first target contour feature matrix at first by use of the second directional convolutional neural network. By directional convolution, directional space transform for the contour feature may be effectively implemented in the feature level. Then, convolution processing is performed on the obtained first directional contour feature matrix by use of the fourth convolutional neural network to obtain the second intermediate contour feature matrix. Under this condition, since directional space transform has been performed on the contour feature through a second directional convolutional layer, the contour feature actually moves towards to a skeletal feature direction. Then, concatenation processing is performed on the second intermediate contour feature matrix and the first target skeletal feature matrix to obtain the third concatenated feature matrix. The third concatenated feature matrix includes the skeletal feature and also includes the contour feature subjected to directional space transform. Then, dimension transform is performed on the third concatenated feature matrix by use of the third transform neural network, namely the skeletal feature is extracted again from the third concatenated feature matrix. The second target skeletal feature matrix obtained in such a manner may be influenced by the contour feature, and fusion of the skeletal feature and the contour feature is implemented.

Specifically, directional convolution consists of multiple iterative convolution steps, and effective directional convolution meets the following requirements.

(1) In each iterative convolution step, element values of only one group of elements in the feature matrix are updated.

(2) After the last iterative convolution step, element values of all elements are updated only once.

For example, directional convolution is performed on the first target skeletal feature matrix. For implementing a directional convolution process, a feature function sequence $F = \{F_k\}_{k=1}^{K}$ may be defined to control an updating sequence of the elements. An input of the function $F_k$ is a position of each element in the first target skeletal feature matrix, and an output of the function $F_k$ represents whether to update the elements in the kth iteration. The output may be 1 or 0. 1 represents that updating is executed, and 0 represents updating is not executed. Specifically, in the kth iteration process, element values of the elements in a region corresponding to $F_k=1$ are updated only, and element values of the elements in another region are kept unchanged. Updating of the ith iteration may be represented as:

$$T_i(X) = F_i \cdot (W \times T_{i-1}(X) + b) + (1-F_i) \cdot T_{i-1}(X).$$

$T_0(X)=X$, X represents the input of directional convolution, i.e., the first target skeletal feature matrix, and W and b represent a shared weight and deviation in multiple iteration processes respectively.

For implementing fusion of the skeletal feature and the contour feature, a pair of symmetric directional convolution operators, namely the feature function sequence $F = \{F_k\}_{k=1}^{K}$, may be set, i.e., a scattering convolution operator $F_i^{S}$ and a gathering convolution operator $F_i^{G}$. The scattering convolution operator is responsible for sequentially updating the elements in the feature matrix from inside to outside, and the gathering convolution operator sequentially updates the elements in the feature matrix from outside to inside.

Under the condition that directional convolution processing is performed on the first target skeletal feature matrix by use of the first directional convolutional neural network, for directional space transform of the skeletal feature element to a position around the element (a position related more to the contour feature), the scattering convolution operator $F_i^S$ is used. Under the condition that directional convolution processing is performed on the first target contour feature matrix by use of the second directional convolutional neural network, for directional space transform of the contour feature element to a middle position of the contour feature matrix (a position related more to the skeletal feature), the gathering convolution operator $F_i^G$ is used.

Specifically, directional convolution processing is performed on the first target skeletal feature matrix by use of the first directional convolutional neural network through the following process.

The first target skeletal feature matrix is divided into multiple submatrices, each submatrix being called a mesh. If the first target skeletal feature matrix is a three-dimensional matrix, dimensionalities of three dimensions being m, n and s respectively, a dimensionality of the first target skeletal feature matrix is represented as m*n*s. If a size of the mesh is 5, a dimensionality of each mesh may be represented as 5*5*s.

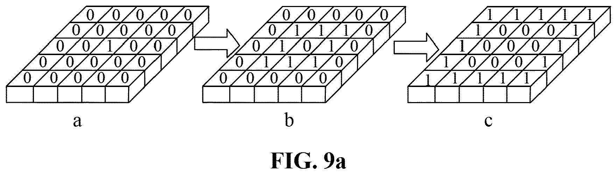

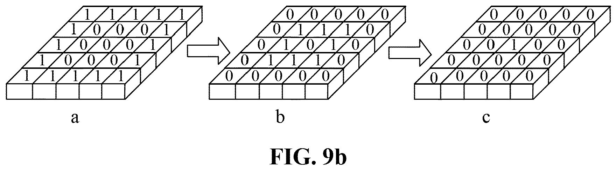

Then, for each mesh, multiple iterative convolutions are performed by use of the scattering convolution operator $F_i^S$ to obtain a target submatrix. As shown in FIG. 9a, a process of performing iterative updating twice on values of elements in a submatrix of which a mesh size is 5 by use of the scattering convolution operator $F_i^S$ is provided. In FIG. 9a, "a" represents an original submatrix, "b" represents a submatrix obtained by one iteration, and "c" represents a submatrix obtained by two iterations, i.e., the target submatrix.

The target submatrices respectively corresponding to all meshes are concatenated to obtain the first directional skeletal feature matrix.

Similarly, directional convolution processing is performed on the first target contour feature matrix by use of the second directional convolutional neural network through the following process.

The first target contour feature matrix is divided into multiple submatrices, each submatrix being called a mesh. If the first target contour feature matrix is a three-dimensional matrix, dimensionalities of three dimensions being m, n and s respectively, a dimensionality of the first target contour feature matrix is represented as m*n*s. If a size of the mesh is 5, a dimensionality of each mesh may be represented as 5*5*s.

Then, for each mesh, multiple iterative convolutions are performed by use of the gathering convolution operator $F_i^G$ to obtain a target submatrix.

As shown in FIG. 9b, a process of performing iterative updating twice on values of elements in a submatrix of which a mesh size is 5 by use of the gathering convolution operator $F_i^G$ is provided. In FIG. 9b, "a" represents an original submatrix, "b" represents a submatrix obtained by one iteration, and "c" represents a submatrix obtained by two iterations, i.e., the target submatrix.

The target submatrices respectively corresponding to all meshes are concatenated to obtain the first directional contour feature matrix.

Herein, it is to be noted that the iterative convolution process of each submatrix may be implemented concurrently.

The examples in FIG. 9a and FIG. 9b are only examples of iteratively updating the values of the elements in the submatrices by use of the scattering convolution operator $F_i^S$ and the gathering convolution operator $F_i^G$.

In another embodiment, the feature fusion neural network may be trained independently in the following manner.

In 4.1, the first sample target skeletal feature matrix and first sample target contour feature matrix of the multiple sample images are acquired.

An acquisition manner is similar to the acquisition manner for the first target skeletal feature matrix and the first target contour feature matrix in the abovementioned embodiment and will not be elaborated herein. They may be acquired under the condition of training jointly with the first feature extraction network, and may also be acquired by use of the pre-trained first feature extraction network.

In 4.2, directional convolution processing is performed on the first sample target skeletal feature matrix by use of a first basic directional convolutional neural network to obtain a first sample directional skeletal feature matrix, a seventh loss is obtained by use of the first sample directional skeletal feature matrix and the practical position information of the contour key points, and training of a present round is performed on the first basic directional convolutional neural network based on the seventh loss.

Herein, the seventh loss is LC3 in FIG. 7.

Herein, performing directional convolution processing on the first sample target skeletal feature matrix by use of the first basic directional convolutional neural network refers to performing directional space transform on the first sample target skeletal feature matrix. Under this condition, it is necessary to keep the position information of the key points represented by the obtained first sample direction skeletal feature matrix consistent with the position information of the contour key points as much as possible. Therefore, it is necessary to obtain the seventh loss based on the first sample target skeletal feature matrix and the practical position information of the contour key points to supervise training for the first basic directional convolutional neural network by use of the seventh loss.

In 4.3, directional convolution processing is performed on the first sample target contour feature matrix by use of a second basic directional convolutional neural network to obtain a first sample directional contour feature matrix, an eighth loss is obtained by use of the first sample directional contour feature matrix and the practical position information of the skeletal key points, and training of a present round is performed on the second basic directional convolutional neural network based on the eighth loss.

Herein, the eighth loss is LS3 in FIG. 7.

In 4.4, convolution processing is performed on the first sample directional contour feature matrix by use of a fourth basic convolutional neural network to obtain a second sample intermediate contour feature matrix, concatenation processing is performed on the obtained second sample intermediate contour feature matrix and the first sample target skeletal feature matrix to obtain a third sample concatenated feature matrix, and dimension transform is performed on the third sample concatenated feature matrix by use of a third basic transform neural network to obtain the second sample target skeletal feature matrix.

In 4.5, fourth predicted position information of the skeletal key points is determined based on the second sample target skeletal feature matrix, and a ninth loss is determined based on the practical position information of the skeletal key points and the fourth predicted position information of the skeletal key points.

Herein, the ninth loss is LS4 in FIG. 7.

In 4.6, convolution processing is performed on the first sample directional skeletal feature matrix by use of a third basic convolutional neural network to obtain a second sample intermediate skeletal feature matrix, concatenation processing is performed on the obtained second sample intermediate skeletal feature matrix and the first sample target contour feature matrix to obtain a fourth sample concatenated feature matrix, and dimension transform is performed on the fourth sample concatenated feature matrix by use of a fourth basic transform neural network to obtain the second sample target contour feature matrix.

In 4.7, fourth predicted position information of the contour key points is determined based on the second sample target contour feature matrix, and a tenth loss is determined based on the practical position information of the contour key points and the fourth predicted position information of the contour key points.

Herein, the tenth loss is LC4 in FIG. 7.

In 4.8, training of a present round is performed on the third basic convolutional neural network, the fourth basic convolutional neural network, the third basic transform neural network and the fourth basic transform neural network based on the ninth loss and the tenth loss.

The first basic directional convolutional neural network, the second basic directional convolutional neural network, the third basic convolutional neural network, the fourth basic convolutional neural network, the third basic transform neural network and the fourth basic transform neural network are trained for multiple grounds to obtain a trained feature fusion neural network.

M3

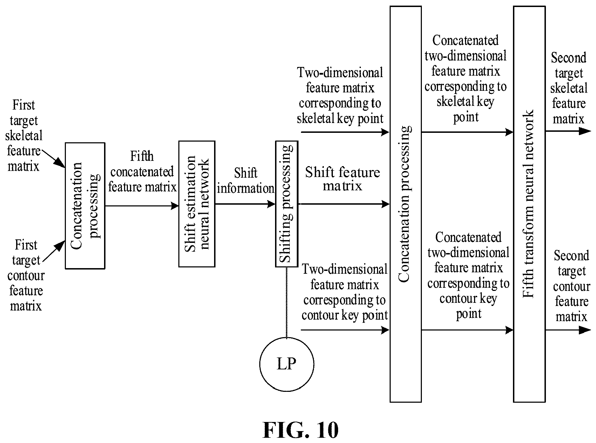

Referring to FIG. 10, a specific structure of another feature fusion neural network provided in the embodiments of the disclosure is shown, which includes a shift estimation neural network and a fifth transform neural network.

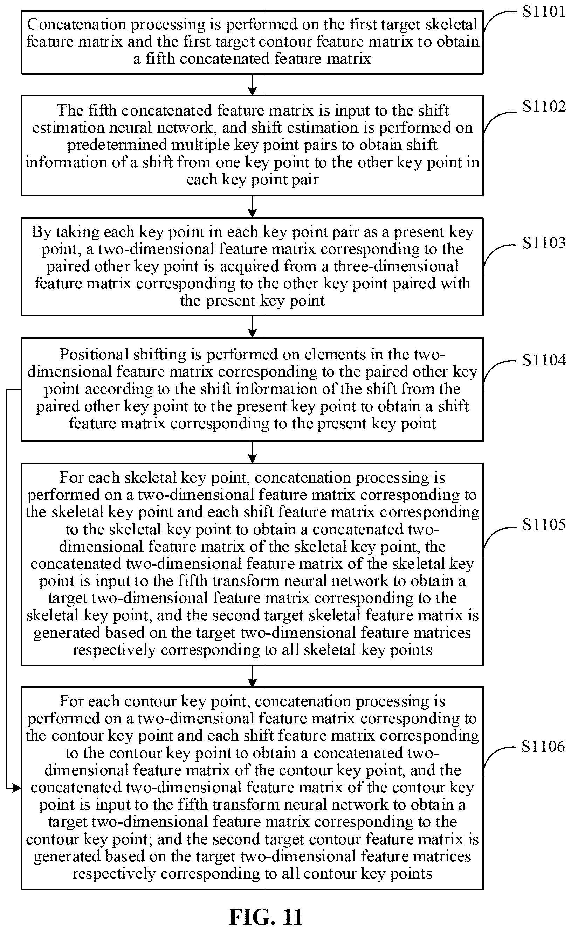

Referring to FIG. 11, the embodiments of the disclosure also provide a specific method for performing feature fusion on the first target skeletal feature matrix and the first target contour feature matrix based on the feature fusion neural network provided in FIG. 10 to obtain the second target skeletal feature matrix and the second target skeletal feature matrix. The following operations are included.

In S1101, concatenation processing is performed on the first target skeletal feature matrix and the first target contour feature matrix to obtain a fifth concatenated feature matrix.

In S1102, the fifth concatenated feature matrix is input to the shift estimation neural network, and shift estimation is performed on predetermined multiple key point pairs to obtain shift information of a shift from one key point to the other key point in each key point pair. The two key points in each key point pair are at adjacent positions, and the two key points include a skeletal key point and a contour key point, or includes two skeletal key points or includes two contour key points.

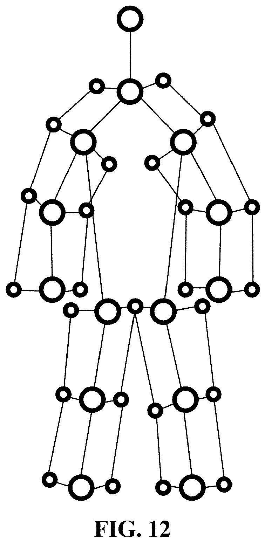

During specific implementation, multiple skeletal key points and multiple contour key points may be predetermined for the human body. As shown in FIG. 12, an example of the multiple skeletal key points and contour key points predetermined for the human body is provided. In the example, there are 14 skeletal key points, represented by relatively large points in FIG. 12 respectively: the top of the head, the neck, the two shoulders, the two elbows, the two wrists, the two crotches, the two knees and the two ankles, and there are 26 contour key points, represented by relatively small points in FIG. 12. Besides the skeletal key point representing the top of the head of the human body, each of the other skeletal key points may correspond to two contour key points. The skeletal key points of the two crotches may correspond to a same contour key point.

Two key points at adjacent positions may form a key point pair. In FIG. 12, every two key points directly connected through a line segment may form a key point pair. That is, there may be the following three conditions for formation of the key point pair: (skeletal key point, skeletal key point), (contour key point, contour key point) and (skeletal key point, contour key point).

The shift estimation neural network includes multiple convolutional layers, and the multiple convolutional layers are sequentially connected to perform feature learning on the skeletal feature and contour feature in the fifth concatenated feature matrix to obtain the shift information of the shift from one key point to the other key point in each key point pair. Each key point corresponds to two sets of shift information.

For example, if the key point pair is (P, Q), each of P and Q representing a key point, shift information of the key point pair includes shift information of a shift from P to Q and shift information of a shift from Q to P.

Each set of shift information includes a shift direction and a shift distance.

In S 1103, by taking each key point in each key point pair as a present key point respectively, a two-dimensional feature matrix corresponding to the paired other key point is acquired from a three-dimensional feature matrix corresponding to the other key point paired with the present key point. If the paired other key point is a skeletal key point, the three-dimensional feature matrix corresponding to the skeletal key point is a first skeletal feature matrix. If the paired other key point is a contour key point, the three-dimensional feature matrix corresponding to the contour key point is a first contour feature matrix.

In S1104, positional shifting is performed on elements in the two-dimensional feature matrix corresponding to the paired other key point according to the shift information of the shift from the paired other key point to the present key point to obtain a shift feature matrix corresponding to the present key point.

Herein, the key point pair (P, Q) is still used as an example, P is determined as the present key point at first, and a two-dimensional feature matrix corresponding to Q is acquired from a three-dimensional feature matrix corresponding to Q.

Herein, if Q is a skeletal key point, the three-dimensional feature matrix corresponding to Q is a first skeletal feature matrix (see S402). If Q is a contour key point, the three-dimensional feature matrix corresponding to Q is a first contour feature matrix (see S403).

Herein, under the condition that Q is a skeletal key point, the first skeletal feature matrix is determined as the three-dimensional feature matrix of Q, and the two-dimensional feature matrix of Q is obtained from the first skeletal feature matrix. This is because the first skeletal feature matrix only includes the skeletal feature, the skeletal feature learned in a subsequent processing process may be more targeted. Similarly, under the condition that Q is a contour key point, the first contour feature matrix is determined as the three-dimensional feature matrix of Q, and the two-dimensional feature matrix of Q is obtained from the first contour feature matrix. This is because the first contour feature matrix only includes the contour feature, the contour feature learned in the subsequent processing process may be more targeted.

After the two-dimensional feature matrix of Q is obtained, positional shifting is performed on elements in the two-dimensional feature matrix of Q based on the shift information of the shift from Q to P to obtain a shift feature matrix corresponding to P.

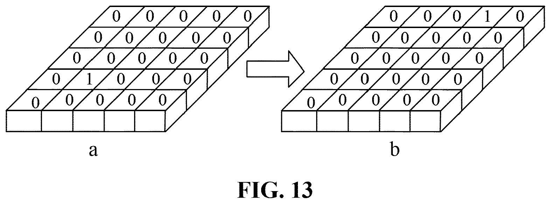

For example, as shown in FIG. 13, if the shift information of the shift from Q to P is (2, 3), 2 representing a shift distance in a first dimension is 2 and 3 representing that a shift distance in a second dimension is 3, the two-dimensional feature matrix of Q is shown as a in FIG. 13. After positional shifting is performed on the elements in the two-dimensional feature matrix of Q, the obtained shift feature matrix corresponding to P is shown as b in FIG. 13. Herein, the shift information is relatively represented by numbers only. During practical implementation, the shift information should be understood in combination with a specific solution. For example, shift information "2" may refer to two elements, two cells and the like.

Then, Q is determined as the present key point, and a two-dimensional feature matrix corresponding to P is acquired from a three-dimensional feature matrix corresponding to P. Then, positional shifting is performed on elements in the two-dimensional feature matrix of P based on the shift information of the shift from P to Q to obtain a shift feature matrix Q corresponding to Q.

In such a manner, the shift feature matrix corresponding to each skeletal key point and the shift feature matrix corresponding to each contour key point may be generated.

Herein, it is to be noted that each skeletal key point may be paired with multiple key points respectively and thus multiple shift feature matrices may also be obtained for each skeletal key point. Each contour key point may also be paired with multiple key points respectively and thus multiple shift feature matrices may also be obtained for each contour key point. Different contour key points may correspond to different numbers of shift feature matrices, and different skeletal key points may also correspond to different numbers of shift feature matrices.

In S1105, for each skeletal key point, concatenation processing is performed on a two-dimensional feature matrix corresponding to the skeletal key point and each shift feature matrix corresponding to the skeletal key point to obtain a concatenated two-dimensional feature matrix of the skeletal key point. The concatenated two-dimensional feature matrix of the skeletal key point is input to the fifth transform neural network to obtain a target two-dimensional feature matrix corresponding to the skeletal key point. The second target skeletal feature matrix is generated based on the target two-dimensional feature matrices respectively corresponding to all skeletal key points.

In S1106, for each contour key point, concatenation processing is performed on a two-dimensional feature matrix corresponding to the contour key point and each shift feature matrix corresponding to the contour key point to obtain a concatenated two-dimensional feature matrix of the contour key point. The concatenated two-dimensional feature matrix of the contour key point is input to the fifth transform neural network to obtain a target two-dimensional feature matrix corresponding to the contour key point. The second target contour feature matrix is generated based on the target two-dimensional feature matrices respectively corresponding to all contour key points.

For example, if P is a skeletal key point and the two-dimensional feature matrix corresponding to P is P', P being in three key point pairs, three shift feature matrices of P, i.e., P1', P2' and P3', may be obtained based on the abovementioned process. P1', P2' and P3' are concatenated to obtain a concatenated two-dimensional feature matrix of P. Under this condition, the three shift feature matrices of P may include a shift feature matrix obtained by performing positional shifting on elements in a two-dimensional feature matrix corresponding to a skeletal key point, and may also include a shift feature matrix obtained by performing positional shifting on elements in a two-dimensional feature matrix corresponding to a contour key point. Therefore, P', P1', P2' and P3' are concatenated to fuse features of all key points, each at a position adjacent to P. Then, convolution processing is performed on the concatenated two-dimensional feature matrix of P by use of the fifth transform neural network, so that an obtained target two-dimensional feature matrix of P not only includes the skeletal feature but also includes the contour feature, and fusion of the skeletal feature and the contour feature is implemented.

Similarly, if P is a contour key point, fusion of the skeletal feature and the contour feature may also be implemented based on the abovementioned process.

In another embodiment, the feature fusion neural network may be trained independently in the following manner.

In 5.1, the first sample target skeletal feature matrix and first sample target contour feature matrix of the multiple sample images are acquired.

An acquisition manner is similar to the acquisition manner for the first target skeletal feature matrix and the first target contour feature matrix in the abovementioned embodiment and will not be elaborated herein. They may be acquired under the condition of training jointly with the first feature extraction network, and may also be acquired by use of the pre-trained first feature extraction network.

In 5.2, concatenation processing is performed on the first sample target skeletal feature matrix and the first sample target contour feature matrix to obtain a fifth sample concatenated feature matrix.

In 5.3, the fifth sample concatenated feature matrix is input to a basic shift estimation neural network, and shift estimation is performed on predetermined multiple key point pairs to obtain predicted shift information of a shift from one key point to the other key point in each key point pair. The two key points in each key point pair are at adjacent positions, and the two key points include a skeletal key point and a contour key point, or includes two skeletal key points or includes two contour key points.

In 5.4, by taking each key point in each key point pair as a present key point respectively, a sample two-dimensional feature matrix corresponding to the paired other key point is acquired from a sample three-dimensional feature matrix corresponding to the other key point paired with the present key point.

In S5.5, positional shifting is performed on elements in the sample two-dimensional feature matrix corresponding to the paired other key point according to the predicted shift information of the shift from the paired other key point to the present key point to obtain a sample shift feature matrix corresponding to the present key point.

In 5.6, a shift loss is determined according to the sample shift feature matrix corresponding to the present key point and the sample two-dimensional feature matrix corresponding to the present key point.

In 5.7, training of a present round is performed on the shift estimation neural network based on the shift loss.

In 5.8, for each skeletal key point, concatenation processing is performed on a sample two-dimensional feature matrix corresponding to the skeletal key point and each sample shift feature matrix corresponding to the skeletal key point to obtain a sample concatenated two-dimensional feature matrix of the skeletal key point. The sample concatenated two-dimensional feature matrix of the skeletal key point is input to a fifth basic transform neural network to obtain a sample target two-dimensional feature matrix corresponding to the skeletal key point. The second sample target skeletal feature matrix is generated based on the sample target two-dimensional feature matrices respectively corresponding to all skeletal key points.

In 5.9, for each contour key point, concatenation processing is performed on a sample two-dimensional feature matrix corresponding to the contour key point and each sample shift feature matrix corresponding to the contour key point to obtain a sample concatenated two-dimensional feature matrix of the contour key point. The sample concatenated two-dimensional feature matrix of the contour key point is input to the fifth basic transform neural network to obtain a sample target two-dimensional feature matrix corresponding to the contour key point, and the sample second target contour feature matrix is generated based on the sample target two-dimensional feature matrices respectively corresponding to all contour key points.

In 5.10, a transform loss is determined based on the second sample target skeletal feature matrix, the second sample target contour feature matrix, the practical position information of the skeletal key points and the practical position information of the contour key points. For example, predicted position information of the skeletal key points may be determined based on the second sample target skeletal feature matrix, and predicted position information of the contour key points may be determined based on the second sample target contour feature matrix. The transform loss is determined based on the predicted position information and practical position information of the skeletal key points and the predicted position information and practical position information of the contour key points.

In 5.11, training of a present round is performed on the fifth basic transform neural network based on the transform loss.

In 5.12, the basic shift estimation neural network and the fifth basic transform neural network are trained for multiple rounds to obtain the feature fusion neural network.

B: multiple times of feature extraction are performed on the image to be detected, feature fusion is performed on the skeletal feature and contour feature obtained by each time of feature extraction after the feature extraction, and the position information of the skeletal key points and the position information of the contour key points are determined based on the feature fusion result of the last time of feature fusion.

Under the condition that multiple times of feature extraction are performed, the (i+1)th time of feature extraction is performed based on a feature fusion result of the ith time of feature fusion, i being a positive integer.

In B, a process of the first time of feature extraction is the same as the process of extracting the skeletal feature and contour feature of the image to be detected in A and will not be elaborated herein.

In B, a specific process of each of other times of feature extraction except the first time of feature extraction includes the following operation.

The first target skeletal feature matrix of the skeletal key points configured to represent the human skeletal feature and the first target contour feature matrix of the contour key points configured to represent the human contour feature are extracted from a feature fusion result of the previous feature fusion by use of a second feature extraction network.

Network parameters of the first feature extraction network and network parameters of the second feature extraction network are different, and network parameters of the second feature extraction network for different times of feature extraction are different.

Herein, each of the first feature extraction network and the second feature extraction network includes multiple convolutional layers. The network parameters of the first feature extraction network and the second feature extraction network include, but not limited to, for example, the number of the convolutional layers, a size of a convolution kernel for each convolutional layer, the number of convolutional kernels for each convolutional layer and the like.

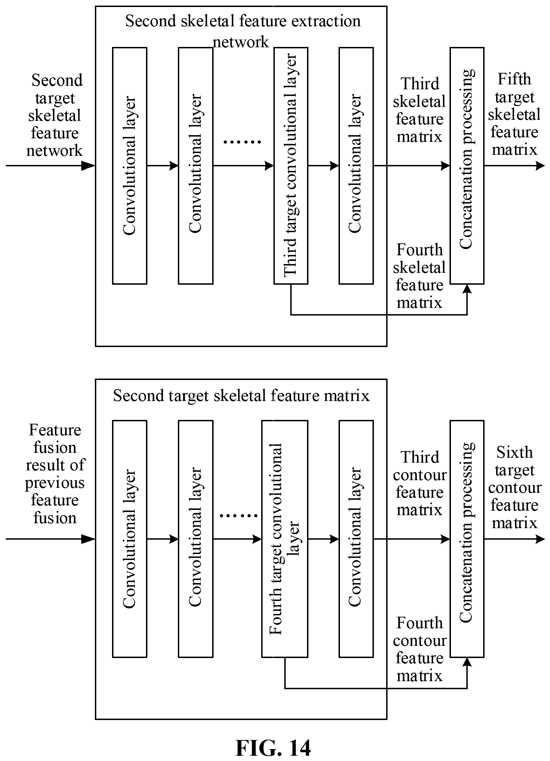

Referring to FIG. 14, the embodiments of the disclosure provides a structure diagram of the second feature extraction network. The second feature extraction network includes a second skeletal feature extraction network and a second contour feature extraction network.

The feature fusion result, for implementing the present feature extraction through the second feature extraction network, of the previous feature fusion includes the second target skeletal feature matrix and the second target contour feature matrix. The specific process of obtaining the second target skeletal feature matrix and the second target contour feature matrix refers to A and will not be elaborated herein.

The first target skeletal feature matrix of the skeletal key points configured to represent the human skeletal feature and the first target contour feature matrix of the contour key points configured to represent the human contour feature are extracted from the feature fusion result of the previous feature fusion by use of the second feature extraction network through, for example, the following specific process.

Convolution processing is performed on the second target skeletal feature matrix obtained by the previous feature fusion by use of the second skeletal feature extraction network to obtain a third skeletal feature matrix, a fourth skeletal feature matrix is acquired from a third target convolutional layer in the second skeletal feature extraction network, and a fifth target skeletal feature matrix is obtained based on the third skeletal feature matrix and the fourth skeletal feature matrix, the third target convolutional layer being any other convolutional layer, except a last convolutional layer, in the second skeletal feature extraction network.

Convolution processing is performed on the second target contour feature matrix obtained by the previous feature fusion by use of the second contour feature extraction network to obtain a third contour feature matrix, a fourth contour feature matrix is acquired from a fourth target convolutional layer in the second contour feature extraction network, and a sixth target contour feature matrix is obtained based on the third contour feature matrix and the fourth contour feature matrix, the fourth target convolutional layer being any other convolutional layer, except a last convolutional layer, in the second contour feature extraction network.

A specific processing manner is similar to the specific process of extracting the first target skeletal feature matrix and the first target contour feature matrix from the image to be detected by use of the first skeletal feature extraction network in A and will not be elaborated herein.

The manners for determining the position information of the skeletal key points and the position information of the contour key points in II are described in the above embodiments.

III: after the position information of the skeletal key points and the position information of the contour key points are obtained based on II, positions of all skeletal key points and positions of all contour key points may be determined from the image to be detected, and then the human detection result may be generated.

The human detection result includes one or more of: the image to be detected including skeletal key point tags and contour key point tags; and a data set including the position information of the skeletal key points and the position information of the contour key points.

Subsequently, one or more of the following operations may further be executed based on the human detection result: human action recognition, human pose detection, human contour regulation, human body image edition and human body mapping.

Herein, action recognition refers to, for example, recognizing a present action of the human body such as fighting , running and the like. Human pose recognition refers to, for example, recognizing a present pose of the human body such as lying, whether to conduct a specified action or not, and the like. Human contour regulation refers to, for example, regulating a body shape and height and the like of the human body. Human body image edition refers to, for example, scaling, rotating and cropping the human body. Human body mapping refers to, for example, after a human body in an image A is detected, pasting a corresponding human body image to an image B.

According to the embodiments of the disclosure, the position information of the skeletal key points configured to represent the human skeletal structure and the position information of the contour key points configured to represent the human contour may be determined from the image to be detected, and the human detection result may be generated based on the position information of the skeletal key points and the position information of the contour key points, so that the representation accuracy is improved, and meanwhile, the calculated data volume is considered.

In addition, in the implementation modes of the disclosure, the human detection result is obtained by use of the position information of the skeletal key points representing the human skeletal structure and the position information of the contour key points representing the human contour, so that information representing the human body is richer, and application scenarios are more extensive, for example, image edition, human body shape changing and the like.

Based on the same inventive concept, the embodiments of the disclosure also provide a human detection apparatus corresponding to the human detection method. The principle of the apparatus in the embodiments of the disclosure for solving the problem is similar to the human detection method of the embodiments of the disclosure, and thus implementation of the apparatus may refer to implementation of the method. Repeated parts will not be elaborated.

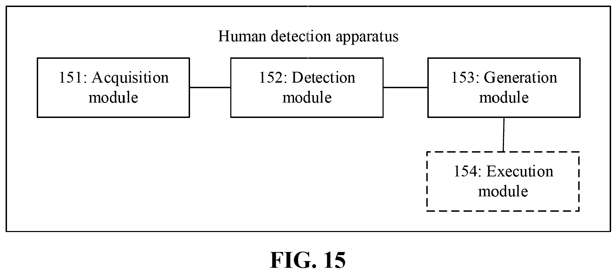

Referring to FIG. 15, a schematic diagram of a human detection apparatus provided in embodiments of the disclosure is shown. The apparatus includes an acquisition module 151, a detection module 152 and a generation module 153. The acquisition module 151 is configured to acquire an image to be detected. The detection module 152 is configured to determine position information of skeletal key points configured to represent a human skeletal structure and position information of contour key points configured to represent a human contour based on the image to be detected. The generation module 153 is configured to generate a human detection result based on the position information of the skeletal key points and the position information of the contour key points.

In a possible implementation mode, the contour key points includes main contour key points and auxiliary contour key points, and there is at least one auxiliary contour key point between adjacent two of the main contour key points.

In a possible implementation mode, the detection module 152 is configured to determine the position information of the contour key points configured to represent the human contour based on the image to be detected in the following manner: determining position information of the main contour key points based on the image to be detected; determining human contour information based on the position information of the main contour key points; and determining position information of multiple auxiliary contour key points based on the determined human contour information.

In a possible implementation mode, the human detection result includes one or more of: the image to be detected added with skeletal key point tags and contour key point tags; and a data set including the position information of the skeletal key points and the position information of the contour key points.

In a possible implementation mode, the human detection apparatus further includes an execution module 154, configured to execute one or more of the following operations based on the human detection result: human action recognition, human pose detection, human contour regulation, human body image edition and human body mapping.

In a possible implementation mode, the detection module 152 is configured to determine, based on the image to be detected, the position information of the skeletal key points configured to represent the human skeletal structure and the position information of the contour key points configured to represent the human contour in the following manner: performing feature extraction based on the image to be detected to obtain a skeletal feature and a contour feature, and performing feature fusion on the obtained skeletal feature and contour feature; and determining the position information of the skeletal key points and the position information of the contour key points based on a feature fusion result.

In a possible implementation mode, the detection module 152 is configured to perform feature extraction based on the image to be detected to obtain the skeletal feature and the contour feature and perform feature fusion on the obtained skeletal feature and contour feature in the following manner: performing at least one time of feature extraction based on the image to be detected, and performing feature fusion on a skeletal feature and contour feature obtained by each time of feature extraction, the (i+1)th time of feature extraction being performed based on a feature fusion result of the ith time of feature fusion under the condition that multiple feature extractions are performed and i being a positive integer; and the detection module 152 is configured to determine the position information of the skeletal key points configured to represent the human skeletal structure and the position information of the contour key points configured to represent the human contour based on the feature fusion result in the following manner: determining the position information of the skeletal key points and the position information of the contour key points based on a feature fusion result of the last time of feature fusion.

In a possible implementation mode, the detection module 152 is configured to perform at least one time of feature extraction based on the image to be detected in the following manner: in the first time of feature extraction, extracting a first target skeletal feature matrix of the skeletal key points configured to represent the human skeletal feature and a first target contour feature matrix of the contour key points configured to represent the human contour feature from the image to be detected by use of a first feature extraction network which is pre-trained; and in the (i+1)th time of feature extraction, extracting the first target skeletal feature matrix of the skeletal key points configured to represent the human skeletal feature and the first target contour feature matrix of the contour key points configured to represent the human contour feature from the feature fusion result of the ith time of feature fusion by use of a second feature extraction network which is pre-trained, network parameters of the first feature extraction network and the second feature extraction network being different and network parameters of the second feature extraction network for different times of feature extraction being different.

In a possible implementation mode, the detection module 152 is configured to perform feature fusion on the obtained skeletal feature and contour feature in the following manner: performing feature fusion on the first target skeletal feature matrix and the first target contour feature matrix by use of a feature fusion neural network which is pre-trained to obtain a second target skeletal feature matrix and a second target contour feature matrix. The second target skeletal feature matrix is a three-dimensional skeletal feature matrix, the three-dimensional skeletal feature matrix includes two-dimensional skeletal feature matrices respectively corresponding to all skeletal key points, and a value of each element in the two-dimensional skeletal feature matrix represents a probability that a pixel corresponding to the element is the corresponding skeletal key point. The second target contour feature matrix is a three-dimensional contour feature matrix, the three-dimensional contour feature matrix includes two-dimensional contour feature matrices respectively corresponding to all contour key points, and a value of each element in the two-dimensional contour feature matrix represents a probability that a pixel corresponding to the element is the corresponding contour key point. Network parameters of the feature fusion neural network for different times of feature fusion are different.

In a possible implementation mode, the detection module 152 is configured to determine the position information of the skeletal key points and the position information of the contour key points based on the feature fusion result of the last time of feature fusion in the following manner: determining the position information of the skeletal key points based on the second target skeletal feature matrix obtained by the last time of feature fusion; and determining the position information of the contour key points based on the second target contour feature matrix obtained by the last time of feature fusion.

In a possible implementation mode, the first feature extraction network includes a common feature extraction network, a first skeletal feature extraction network and a first contour feature extraction network, and the detection module 152 is configured to extract the first target skeletal feature matrix of the skeletal key points configured to represent the human skeletal feature and the first target contour feature matrix of the contour key points configured to represent the human contour feature from the image to be detected by use of the first feature extraction network in the following manner:

performing convolution processing on the image to be detected by use of the common feature extraction network to obtain a basic feature matrix including the skeletal feature and the contour feature; performing convolution processing on the basic feature matrix by use of the first skeletal feature extraction network to obtain a first skeletal feature matrix, acquiring a second skeletal feature matrix from a first target convolutional layer in the first skeletal feature extraction network, and obtaining the first target skeletal feature matrix based on the first skeletal feature matrix and the second skeletal feature matrix, the first target convolutional layer being any other convolutional layer, except a last convolutional layer, in the first skeletal feature extraction network; and performing convolution processing on the basic feature matrix by use of the first contour feature extraction network to obtain a first contour feature matrix, acquiring a second contour feature matrix from a second target convolutional layer in the first contour feature extraction network, and obtaining the first target contour feature matrix based on the first contour feature matrix and the second contour feature matrix, the second target convolutional layer being any other convolutional layer, except a last convolutional layer, in the first contour feature extraction network.

In a possible implementation mode, the detection module 152 is configured to obtain the first target skeletal feature matrix based on the first skeletal feature matrix and the second skeletal feature matrix in the following manner: performing concatenation processing on the first skeletal feature matrix and the second skeletal feature matrix to obtain a first concatenated skeletal feature matrix, and

performing dimension transform processing on the first concatenated skeletal feature matrix to obtain the first target skeletal feature matrix.

The operation that the first target contour feature matrix is obtained based on the first contour feature matrix and the second contour feature matrix includes that: concatenation processing is performed on the first contour feature matrix and the second contour feature matrix to obtain a first concatenated contour feature matrix, and dimension transform processing is performed on the first concatenated contour feature matrix to obtain the first target contour feature matrix, a dimension of the first target skeletal feature matrix being the same as a dimension of the first target contour feature matrix and the first target skeletal feature matrix and the first target contour feature matrix being the same in dimensionality in the same dimension.

In a possible implementation mode, the feature fusion neural network includes a first convolutional neural network, a second convolutional neural network, a first transform neural network and a second transform neural network.

The detection module 152 is configured to perform feature fusion on the first target skeletal feature matrix and the first target contour feature matrix by use of the feature fusion neural network to obtain the second target skeletal feature matrix and the second target contour feature matrix in the following manner: performing convolution processing on the first target skeletal feature matrix by use of the first convolutional neural network to obtain a first intermediate skeletal feature matrix, and performing convolution processing on the first target contour feature matrix by use of the second convolutional neural network to obtain a first intermediate contour feature matrix; performing concatenation processing on the first intermediate contour feature matrix and the first target skeletal feature matrix to obtain a first concatenated feature matrix, and performing dimension transform on the first concatenated feature matrix by use of the first transform neural network to obtain the second target skeletal feature matrix; and performing concatenation processing on the first intermediate skeletal feature matrix and the first target contour feature matrix to obtain a second concatenated feature matrix, and performing dimension transform on the second concatenated feature matrix by use of the second transform neural network to obtain the second target contour feature matrix.

In a possible implementation mode, the feature fusion neural network includes a first directional convolutional neural network, a second directional convolutional neural network, a third convolutional neural network, a fourth convolutional neural network, a third transform neural network and a fourth transform neural network.

The detection module 152 is configured to perform feature fusion on the first target skeletal feature matrix and the first target contour feature matrix by use of the feature fusion neural network to obtain the second target skeletal feature matrix and the second target contour feature matrix in the following manner: performing directional convolution processing on the first target skeletal feature matrix by use of the first directional convolutional neural network to obtain a first directional skeletal feature matrix, and performing convolution processing on the first directional skeletal feature matrix by use of the third convolutional neural network to obtain a second intermediate skeletal feature matrix; performing directional convolution processing on the first target contour feature matrix by use of the second directional convolutional neural network to obtain a first directional contour feature matrix, and performing convolution processing on the first directional contour feature matrix by use of the fourth convolutional neural network to obtain a second intermediate contour feature matrix; performing concatenation processing on the second intermediate contour feature matrix and the first target skeletal feature matrix to obtain a third concatenated feature matrix, and performing dimension transform on the third concatenated feature matrix by use of the third transform neural network to obtain the second target skeletal feature matrix; and performing concatenation processing on the second intermediate skeletal feature matrix and the first target contour feature matrix to obtain a fourth concatenated feature matrix, and performing dimension transform on the fourth concatenated feature matrix by use of the fourth transform neural network to obtain the second target contour feature matrix.

In a possible implementation mode, the feature fusion neural network includes a shift estimation neural network and a fifth transform neural network.

The detection module 152 is configured to perform feature fusion on the first target skeletal feature matrix and the first target contour feature matrix by use of the feature fusion neural network to obtain the second target skeletal feature matrix and the second target contour feature matrix in the following manner: performing concatenation processing on the first target skeletal feature matrix and the first target contour feature matrix to obtain a fifth concatenated feature matrix; inputting the fifth concatenated feature matrix to the shift estimation neural network, and performing shift estimation on multiple predetermined key point pairs to obtain shift information of a shift from one key point in each key point pair to the other key point in the key point pair; by taking each key point in each key point pair as a present key point, acquiring, from a three-dimensional feature matrix corresponding to the other key point paired with the present key point, a two-dimensional feature matrix corresponding to the paired other key point; performing positional shifting on elements in the two-dimensional feature matrix corresponding to the paired other key point according to the shift information of the shift from the paired other key point to the present key point to obtain a shift feature matrix corresponding to the present key point; for each skeletal key point, performing concatenation processing on a two-dimensional feature matrix corresponding to the skeletal key point and each shift feature matrix corresponding to the skeletal key point to obtain a concatenated two-dimensional feature matrix of the skeletal key point, inputting the concatenated two-dimensional feature matrix of the skeletal key point to the fifth transform neural network to obtain a target two-dimensional feature matrix corresponding to the skeletal key point, and generating the second target skeletal feature matrix based on the target two-dimensional feature matrices respectively corresponding to all skeletal key points; and for each contour key point, performing concatenation processing on a two-dimensional feature matrix corresponding to the contour key point and each shift feature matrix corresponding to the contour key point to obtain a concatenated two-dimensional feature matrix of the contour key point, inputting the concatenated two-dimensional feature matrix of the contour key point to the fifth transform neural network to obtain a target two-dimensional feature matrix corresponding to the contour key point, and generating the second target contour feature matrix based on the target two-dimensional feature matrices respectively corresponding to all contour key points.

In a possible implementation mode, the human detection method is implemented through a human detection model; the human detection model includes the first feature extraction network and/or the feature fusion neural network; and the human detection model is obtained by training through sample images in a training sample set, the sample images being tagged with practical position information of the skeletal key points of the human skeletal structure and practical position information of the contour key points of the human contour.

The descriptions about the processing flow of each module in the apparatus and interaction flows between each module may refer to the related descriptions in the method embodiments, and elaborations are omitted herein.

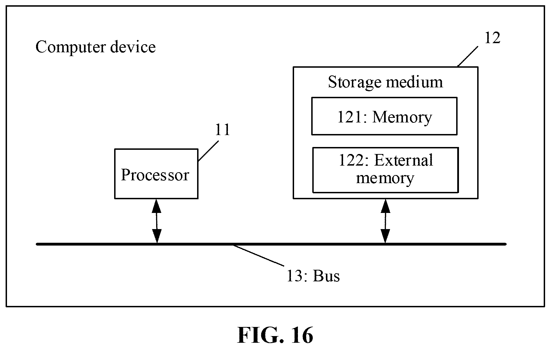

The embodiments of the disclosure also provide a computer device. FIG. 16 is a structure diagram of a computer device according to embodiments of the disclosure. The computer device includes:

a memory 11, a storage medium 12 and a bus 13. The storage medium 12 is configured to store executable instructions, and includes a memory 121 and an external memory 122. Herein, the memory 121, also called an internal memory, is configured to temporarily store processing data in the processor 11 and data exchanged with the external memory 122 such as a hard disk. The processor 11 performs data exchange with the memory 121 and the external memory 122. Under the condition that the computer device 100 runs, the processor 11 communicates with the storage medium 12 through the bus 13 such that the processor 11 executes the following instructions of: acquiring an image to be detected; determining position information of skeletal key points configured to represent a human skeletal structure and position information of contour key points configured to represent a human contour based on the image to be detected; and generating a human detection result based on the position information of the skeletal key points and the position information of the contour key points.

The embodiments of the disclosure also provide a computer-readable storage medium, in which computer programs are stored, the computer programs being operated by a processor to execute the operations of the human detection method in the method embodiments.

A computer program product for a human detection method provided in the embodiments of the disclosure includes a computer-readable storage medium storing program codes, and instructions in the program codes may be configured to execute the operations of the human detection method in the method embodiments, specifically referring to the method embodiments. Elaborations are omitted herein.

It can be clearly learned by those skilled in the art that specific working processes of the system and device described above may refer to the corresponding processes in the method embodiment and will not be elaborated herein for convenient and brief description. In some embodiments provided by the disclosure, it is to be understood that the disclosed system, device and method may be implemented in another manner. The device embodiment described above is only schematic, and for example, division of the units is only logic function division, and other division manners may be adopted during practical implementation. For another example, multiple units or components may be combined or integrated into another system, or some characteristics may be neglected or not executed. In addition, coupling or direct coupling or communication connection between each displayed or discussed component may be indirect coupling or communication connection, implemented through some communication interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the disclosure may be integrated into a processing unit, each unit may also physically exist independently, and two or more than two units may also be integrated into a unit.

When being realized in form of software functional unit and sold or used as an independent product, the function may also be stored in a non-volatile computer-readable storage medium executable for the processor. Based on such an understanding, the technical solutions of the disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the steps of the method in each embodiment of the disclosure. The storage medium includes: various media capable of storing program codes such as a U disk, a mobile hard disk, a Read-Only Memory (ROM), a Random Access Memory (RAM), a magnetic disk or an optical disk.

It is finally to be noted that the above embodiments are only the specific implementation modes of the disclosure and are adopted not to limit the disclosure but to describe the technical solutions of the disclosure. The scope of protection of the disclosure is not limited thereto. Although the disclosure is described with reference to the embodiments in detail, those of ordinary skill in the art should know that those skilled in the art may still make modifications or apparent variations to the technical solutions recorded in the embodiments or make equivalent replacements to part of technical features within the technical scope disclosed in the disclosure and these modifications, variations or replacements do not make the essence of the corresponding technical solutions departs from the spirit and scope of the technical solutions of the embodiments of the disclosure and shall fall within the scope of protection of the disclosure. Therefore, the scope of protection of the disclosure shall be subject to the scope of protection of the claims.

**Claims**

1. A human detection method, comprising:

   acquiring an image to be detected;
   determining, based on the image to be detected, position information of skeletal key points configured to represent a human skeletal structure and position information of contour key points configured to represent a human contour; and
   generating a human detection result based on the position information of the skeletal key points and the position information of the contour key points.

2. The human detection method of claim 1, wherein the contour key points comprises main contour key points and auxiliary contour key points, and there is at least one auxiliary contour key point between adjacent two of the main contour key points.

3. The human detection method of claim 2, wherein determining, based on the image to be detected, the position information of the contour key points configured to represent the human contour comprises:

   determining position information of the main contour key points based on the image to be detected;
   determining human contour information based on the position information of the main contour key points; and
   determining position information of multiple auxiliary contour key points based on the determined human contour information.

4. The human detection method of any one of claims 1-3, wherein the human detection result comprises at least one of:

   the image to be detected added with skeletal key point tags and contour key point tags; or
   a data set comprising the position information of the skeletal key points and the position information of the contour key points.

5. The human detection method of claim 4, further comprising:
   executing, based on the human detection result, at least one of the following operations: human action recognition, human pose detection, human contour regulation, human body image edition or human body mapping.

6. The human detection method of any one of claims 1-5, wherein determining, based on the image to be detected, the position information of the skeletal key points configured to represent the human skeletal structure and the position information of the contour key points configured to represent the human contour comprises:

performing, based on the image to be detected, feature extraction to obtain a skeletal feature and a contour feature, and performing feature fusion on the obtained skeletal feature and contour feature; and

determining, based on a feature fusion result, the position information of the skeletal key points and the position information of the contour key points.

7. The human detection method of claim 6, wherein performing, based on the image to be detected, feature extraction to obtain the skeletal feature and the contour feature and performing feature fusion on the obtained skeletal feature and contour feature comprises:

performing, based on the image to be detected, at least one time of feature extraction, and performing feature fusion on a skeletal feature and contour feature obtained by each time of feature extraction, an (i+1)th time of feature extraction being performed based on a feature fusion result of an ith time of feature fusion under the condition that multiple feature extractions are performed, and i being a positive integer; and

determining, based on the feature fusion result, the position information of the skeletal key points configured to represent the human skeletal structure and the position information of the contour key points configured to represent the human contour comprises:

determining, based on a feature fusion result of a last time of feature fusion, the position information of the skeletal key points and the position information of the contour key points.

8. The human detection method of claim 7, wherein performing, based on the image to be detected, at least one time of feature extraction comprises:

in a first time of feature extraction, extracting, from the image to be detected by use of a first feature extraction network which is pre-trained, a first target skeletal feature matrix of the skeletal key points configured to represent the human skeletal feature and a first target contour feature matrix of the contour key points configured to represent the human contour feature; and

in the (i+1)th time of feature extraction, extracting, from the feature fusion result of the ith time of feature fusion by use of a second feature extraction network which is pre-trained, the first target skeletal feature matrix and the first target contour feature matrix,

wherein network parameters of the first feature extraction network and the second feature extraction network being different, and network parameters of the second feature extraction network for different times of feature extraction being different.

9. The human detection method of claim 8, wherein performing feature fusion on the obtained skeletal feature and contour feature comprises:

performing, by use of a feature fusion neural network which is pre-trained, feature fusion on the first target skeletal feature matrix and the first target contour feature matrix to obtain a second target skeletal feature matrix and a second target contour feature matrix,

wherein the second target skeletal feature matrix is a three-dimensional skeletal feature matrix, the three-dimensional skeletal feature matrix comprises two-dimensional skeletal feature matrices respectively corresponding to all skeletal key points, and a value of each element in the two-dimensional skeletal feature matrix represents a probability that a pixel corresponding to the element is the corresponding skeletal key point;

the second target contour feature matrix is a three-dimensional contour feature matrix, the three-dimensional contour feature matrix comprises two-dimensional contour feature matrices respectively corresponding to all contour key points, and a value of each element in the two-dimensional contour feature matrix represents a probability that a pixel corresponding to the element is the corresponding contour key point; and

network parameters of the feature fusion neural network for different times of feature fusion are different.

10. The human detection method of claim 8, wherein the first feature extraction network comprises a common feature extraction network, a first skeletal feature extraction network and a first contour feature extraction network, and extracting, from the image to be detected by use of the first feature extraction network, the first target skeletal feature matrix and the first target contour feature matrix comprises:

performing, by use of the common feature extraction network, convolution processing on the image to be detected to obtain a basic feature matrix comprising the skeletal feature and the contour feature;

performing, by use of the first skeletal feature extraction network, convolution processing on the basic feature matrix to obtain a first skeletal feature matrix;

acquiring a second skeletal feature matrix from a first target convolutional layer in the first skeletal feature extraction network;

obtaining the first target skeletal feature matrix based on the first skeletal feature matrix and the second skeletal feature matrix, the first target convolutional layer being any other convolutional layer, except a last convolutional layer, in the first skeletal feature extraction network;

performing, by use of the first contour feature extraction network, convolution processing on the basic feature matrix to obtain a first contour feature matrix;

acquiring a second contour feature matrix from a second target convolutional layer in the first contour feature extraction network; and

obtaining the first target contour feature matrix based on the first contour feature matrix and the second contour feature matrix, the second target convolutional layer being any other convolutional layer, except a last convolutional layer, in the first contour feature extraction network.

11. The human detection method of claim 10, wherein obtaining the first target skeletal feature matrix based on the first skeletal feature matrix and the second skeletal feature matrix comprises:

performing concatenation processing on the first skeletal feature matrix and the second skeletal feature matrix to obtain a first concatenated skeletal feature matrix, and performing dimension transform processing on the first concatenated skeletal feature matrix to obtain the first target skeletal feature matrix; and

obtaining the first target contour feature matrix based on the first contour feature matrix and the second contour feature matrix comprises:

performing concatenation processing on the first contour feature matrix and the second contour feature matrix to obtain a first concatenated contour feature matrix, and performing dimension transform processing on the first concatenated contour feature matrix to obtain the first target contour feature matrix, wherein a dimension of the first target skeletal feature matrix being the same as a dimension of the first target contour feature matrix, and the first target skeletal feature matrix and the first target contour feature matrix being the same in dimensionality in a same dimension.

12. The human detection method of claim 9, wherein the feature fusion neural network comprises a first convolutional neural network, a second convolutional neural network, a first transform neural network and a second transform neural network, and

performing, by use of the feature fusion neural network, feature fusion on the first target skeletal feature matrix and the first target contour feature matrix to obtain the second target skeletal feature matrix and the second target contour feature matrix comprises:

performing, by use of the first convolutional neural network, convolution processing on the first target skeletal feature matrix to obtain a first intermediate skeletal feature matrix;

performing, by use of the second convolutional neural network, convolution processing on the first target contour feature matrix to obtain a first intermediate contour feature matrix;

performing concatenation processing on the first intermediate contour feature matrix and the first target skeletal feature matrix to obtain a first concatenated feature matrix;

performing, by use of the first transform neural network, dimension transform on the first concatenated feature matrix to obtain the second target skeletal feature matrix; and

performing concatenation processing on the first intermediate skeletal feature matrix and the first target contour feature matrix to obtain a second concatenated feature matrix; and

performing, by use of the second transform neural network, dimension transform on the second concatenated feature matrix to obtain the second target contour feature matrix.

13. The human detection method of claim 9, wherein the feature fusion neural network comprises a first directional convolutional neural network, a second directional convolutional neural network, a third convolutional neural network, a fourth convolutional neural network, a third transform neural network and a fourth transform neural network, and

performing, by use of the feature fusion neural network, feature fusion on the first target skeletal feature matrix and the first target contour feature matrix to obtain the second target skeletal feature matrix and the second target contour feature matrix comprises:

performing, by use of the first directional convolutional neural network, directional convolution processing on the first target skeletal feature matrix to obtain a first directional skeletal feature matrix;

performing, by use of the third convolutional neural network, convolution processing on the first directional skeletal feature matrix to obtain a second intermediate skeletal feature matrix;

performing, by use of the second directional convolutional neural network, directional convolution processing on the first target contour feature matrix to obtain a first directional contour feature matrix;

performing, by use of the fourth convolutional neural network, convolution processing on the first directional contour feature matrix to obtain a second intermediate contour feature matrix;

performing concatenation processing on the second intermediate contour feature matrix and the first target skeletal feature matrix to obtain a third concatenated feature matrix;

performing, by use of the third transform neural network, dimension transform on the third concatenated feature matrix to obtain the second target skeletal feature matrix;

performing concatenation processing on the second intermediate skeletal feature matrix and the first target contour feature matrix to obtain a fourth concatenated feature matrix, and

performing, by use of the fourth transform neural network, dimension transform on the fourth concatenated feature matrix to obtain the second target contour feature matrix.

14. The human detection method of claim 9, wherein the feature fusion neural network comprises a shift estimation neural network and a fifth transform neural network, and

performing, by use of the feature fusion neural network, feature fusion on the first target skeletal feature matrix and the first target contour feature matrix to obtain the second target skeletal feature matrix and the second target contour feature matrix comprises:

performing concatenation processing on the first target skeletal feature matrix and the first target contour feature matrix to obtain a fifth concatenated feature matrix;

inputting the fifth concatenated feature matrix to the shift estimation neural network, and performing shift estimation on multiple predetermined key point pairs to obtain shift information of a shift from one key point in each key point pair to the other key point in the key point pair;

by taking each key point in each key point pair as a present key point respectively, acquiring, from a three-dimensional feature matrix corresponding to the other key point paired with the present key point, a two-dimensional feature matrix corresponding to the paired other key point;

performing, according to shift information of a shift from the paired other key point to the present key point, positional shifting on elements in the two-dimensional feature matrix corresponding to the paired other key point to obtain a shift feature matrix corresponding to the present key point;

for each skeletal key point, performing concatenation processing on a two-dimensional feature matrix corresponding to the skeletal key point and each shift feature matrix corresponding to the skeletal key point to obtain a concatenated two-dimensional feature matrix of the skeletal key point;

inputting the concatenated two-dimensional feature matrix of the skeletal key point to the fifth transform neural network to obtain a target two-dimensional feature matrix corresponding to the skeletal key point;

generating the second target skeletal feature matrix based on the target two-dimensional feature matrices respectively corresponding to all skeletal key points;

for each contour key point, performing concatenation processing on a two-dimensional feature matrix corresponding to the contour key point and each shift feature matrix corresponding to the contour key point to obtain a concatenated two-dimensional feature matrix of the contour key point;

inputting the concatenated two-dimensional feature matrix of the contour key point to the fifth transform neural network to obtain a target two-dimensional feature matrix corresponding to the contour key point; and

generating the second target contour feature matrix based on the target two-dimensional feature matrices respectively corresponding to all contour key points.

15. The human detection method of any one of claims 1-14, wherein the human detection method is implemented through a human detection model, and the human detection model comprises the first feature extraction network and/or the feature fusion neural network; and

wherein the human detection model is obtained by training through sample images in a training sample set, the sample images being tagged with practical position information of the skeletal key points of the human skeletal structure and practical position information of the contour key points of the human contour.

16. A human detection apparatus, comprising:

an acquisition module, configured to acquire an image to be detected;

a detection module, configured to determine, based on the image to be detected, position information of skeletal key points configured to represent a human skeletal structure and position information of contour key points configured to represent a human contour; and

a generation module, configured to generate a human detection result based on the position information of the skeletal key points and the position information of the contour key points.

17. The human detection apparatus of claim 16, wherein the contour key points comprises main contour key points and auxiliary contour key points, and there is at least one auxiliary contour key point between adjacent two of the main contour key points.

18. The human detection apparatus of claim 17, wherein the detection module is configured to determine the position information of the contour key points configured to represent the human contour based on the image to be detected in the following manner:

determining position information of the main contour key points based on the image to be detected;

determining human contour information based on the position information of the main contour key points; and

determining position information of multiple auxiliary contour key points based on the determined human contour information.

19. The human detection apparatus of any one of claims 16-18, wherein the human detection result comprises at least one of:

the image to be detected added with skeletal key point tags and contour key point tags; or

a data set comprising the position information of the skeletal key points and the position information of the contour key points.

20. The human detection apparatus of claim 19, further comprising:

an execution module, configured to execute, based on the human detection result, at least one of the following operations: human action recognition, human pose detection, human contour regulation, human body image edition or human body mapping.

21. The human detection apparatus of any one of claims 16-20, wherein the detection module is configured to determine, based on the image to be detected, the position information of the skeletal key points configured to represent the human skeletal structure and the position information of the contour key points configured to represent the human contour in the following manner:

performing, based on the image to be detected, feature extraction to obtain a skeletal feature and a contour feature, and performing feature fusion on the obtained skeletal feature and contour feature; and

determining, based on a feature fusion result, the position information of the skeletal key points and the position information of the contour key points.

22. The human detection apparatus of claim 21, wherein the detection module is configured to perform, based on the image to be detected, feature extraction to obtain the skeletal feature and the contour feature and perform feature fusion on the obtained skeletal feature and contour feature in the following manner:

performing, based on the image to be detected, at least one time of feature extraction, and performing feature fusion on a skeletal feature and contour feature obtained by each time of feature extraction, an (i+1)th time of feature extraction being performed based on a feature fusion result of an ith time of feature fusion under the condition that multiple feature extractions are performed, and i being a positive integer; and

the detection module is configured to determine, based on the feature fusion result, the position information of the skeletal key points configured to represent the human skeletal structure and the position information of the contour key points configured to represent the human contour in the following manner:

determining, based on a feature fusion result of the last time of feature fusion, the position information of the skeletal key points and the position information of the contour key points.

23. The human detection apparatus of claim 22, wherein the detection module is configured to perform, based on the image to be detected, at least one time of feature extraction in the following manner:

in a first time of feature extraction, extracting, from the image to be detected by use of a first feature extraction network which is pre-trained, a first target skeletal feature matrix of the skeletal key points configured to represent the human skeletal feature and a first target contour feature matrix of the contour key points configured to represent the human contour feature; and

in the (i+1)th time of feature extraction, extracting, from the feature fusion result of the ith time of feature fusion by use of a second feature extraction network which is pre-trained, the first target skeletal feature matrix and the first target contour feature matrix ,

wherein network parameters of the first feature extraction network and the second feature extraction network being different, and network parameters of the second feature extraction network for different times of feature extraction being different.

24. The human detection apparatus of claim 23, wherein the detection module is configured to perform feature fusion on the obtained skeletal feature and contour feature in the following manner:

performing, by use of a feature fusion neural network which is pre-trained, feature fusion on the first target skeletal feature matrix and the first target contour feature matrix to obtain a second target skeletal feature matrix and a second target contour feature matrix,

wherein the second target skeletal feature matrix is a three-dimensional skeletal feature matrix, the three-dimensional skeletal feature matrix comprises two-dimensional skeletal feature matrices respectively corresponding to all skeletal key points, and a value of each element in the two-dimensional skeletal feature matrix represents a probability that a pixel corresponding to the element is the corresponding skeletal key point;

the second target contour feature matrix is a three-dimensional contour feature matrix, the three-dimensional contour feature matrix comprises two-dimensional contour feature matrices respectively corresponding to all contour key points, and a value of each element in the two-dimensional contour feature matrix represents a probability that a pixel corresponding to the element is the corresponding contour key point; and

network parameters of the feature fusion neural network for different times of feature fusion are different.

25. The human detection apparatus of claim 23, wherein the first feature extraction network comprises a common feature extraction network, a first skeletal feature extraction network and a first contour feature extraction network, and the detection module is configured to extract, from the image to be detected by use of the first feature extraction network, the first target skeletal feature matrix and the first target contour feature matrix in the following manner:

performing, by use of the common feature extraction network, convolution processing on the image to be detected to obtain a basic feature matrix comprising the skeletal feature and the contour feature;

performing, by use of the first skeletal feature extraction network, convolution processing on the basic feature matrix to obtain a first skeletal feature matrix;

acquiring a second skeletal feature matrix from a first target convolutional layer in the first skeletal feature extraction network;

obtaining the first target skeletal feature matrix based on the first skeletal feature matrix and the second skeletal feature matrix, the first target convolutional layer being any other convolutional layer, except a last convolutional layer, in the first skeletal feature extraction network;

performing, by use of the first contour feature extraction network, convolution processing on the basic feature matrix to obtain a first contour feature matrix;

acquiring a second contour feature matrix from a second target convolutional layer in the first contour feature extraction network; and

obtaining the first target contour feature matrix based on the first contour feature matrix and the second contour feature matrix, the second target convolutional layer being any other convolutional layer, except a last convolutional layer, in the first contour feature extraction network.

26. The human detection apparatus of claim 25, wherein the detection module is configured to obtain the first target skeletal feature matrix based on the first skeletal feature matrix and the second skeletal feature matrix in the following manner:

performing concatenation processing on the first skeletal feature matrix and the second skeletal feature matrix to obtain a first concatenated skeletal feature matrix, and

performing dimension transform processing on the first concatenated skeletal feature matrix to obtain the first target skeletal feature matrix; and

obtaining the first target contour feature matrix based on the first contour feature matrix and the second contour feature matrix comprises:

performing concatenation processing on the first contour feature matrix and the second contour feature matrix to obtain a first concatenated contour feature matrix, and

performing dimension transform processing on the first concatenated contour feature matrix to obtain the first target contour feature matrix,

wherein a dimension of the first target skeletal feature matrix being the same as a dimension of the first target contour feature matrix and the first target skeletal feature matrix and the first target contour feature matrix being the same in dimensionality in a same dimension.

27. The human detection apparatus of claim 24, wherein the feature fusion neural network comprises a first convolutional neural network, a second convolutional neural network, a first transform neural network and a second transform neural network, and

the detection module is configured to perform, by use of the feature fusion neural network, feature fusion on the first target skeletal feature matrix and the first target contour feature matrix to obtain the second target skeletal feature matrix and the second target contour feature matrix in the following manner:

performing, by use of the first convolutional neural network, convolution processing on the first target skeletal feature matrix to obtain a first intermediate skeletal feature matrix;

performing, by use of the second convolutional neural network, convolution processing on the first target contour feature matrix to obtain a first intermediate contour feature matrix;

performing concatenation processing on the first intermediate contour feature matrix and the first target skeletal feature matrix to obtain a first concatenated feature matrix;

performing, by use of the first transform neural network, dimension transform on the first concatenated feature matrix to obtain the second target skeletal feature matrix; and

performing concatenation processing on the first intermediate skeletal feature matrix and the first target contour feature matrix to obtain a second concatenated feature matrix;

performing, by use of the second transform neural network, dimension transform on the second concatenated feature matrix to obtain the second target contour feature matrix.

28. The human detection apparatus of claim 24, wherein the feature fusion neural network comprises a first directional convolutional neural network, a second directional convolutional neural network, a third convolutional neural network, a fourth convolutional neural network, a third transform neural network and a fourth transform neural network, and

the detection module is configured to perform, by use of the feature fusion neural network, feature fusion on the first target skeletal feature matrix and the first target contour feature matrix to obtain the second target skeletal feature matrix and the second target contour feature matrix in the following manner:

performing, by use of the first directional convolutional neural network, directional convolution processing on the first target skeletal feature matrix to obtain a first directional skeletal feature matrix;

performing, by use of the third convolutional neural network, convolution processing on the first directional skeletal feature matrix to obtain a second intermediate skeletal feature matrix;

performing, by use of the second directional convolutional neural network, directional convolution processing on the first target contour feature matrix to obtain a first directional contour feature matrix;

performing, by use of the fourth convolutional neural network, convolution processing on the first directional contour feature matrix to obtain a second intermediate contour feature matrix;

performing concatenation processing on the second intermediate contour feature matrix and the first target skeletal feature matrix to obtain a third concatenated feature matrix;

performing, by use of the third transform neural network, dimension transform on the third concatenated feature matrix to obtain the second target skeletal feature matrix; and

performing concatenation processing on the second intermediate skeletal feature matrix and the first target contour feature matrix to obtain a fourth concatenated feature matrix;

performing, by use of the fourth transform neural network, dimension transform on the fourth concatenated feature matrix to obtain the second target contour feature matrix.

29. The human detection apparatus of claim 24, wherein the feature fusion neural network comprises a shift estimation neural network and a fifth transform neural network, and

the detection module is configured to perform, by use of the feature fusion neural network, feature fusion on the first target skeletal feature matrix and the first target contour feature matrix to obtain the second target skeletal feature matrix and the second target contour feature matrix in the following manner:

performing concatenation processing on the first target skeletal feature matrix and the first target contour feature matrix to obtain a fifth concatenated feature matrix;

inputting the fifth concatenated feature matrix to the shift estimation neural network, and performing shift estimation on multiple predetermined key point pairs to obtain shift information of a shift from one key point in each key point pair to the other key point in the key point pair;

by taking each key point in each key point pair as a present key point respectively, acquiring, from a three-dimensional feature matrix corresponding to the other key point paired with the present key point, a two-dimensional feature matrix corresponding to the paired other key point;

performing, according to shift information of a shift from the paired other key point to the present key point, positional shifting on elements in the two-dimensional feature matrix corresponding to the paired other key point to obtain a shift feature matrix corresponding to the present key point;

for each skeletal key point, performing concatenation processing on a two-dimensional feature matrix corresponding to the skeletal key point and each shift feature matrix corresponding to the skeletal key point to obtain a concatenated two-dimensional feature matrix of the skeletal key point;

inputting the concatenated two-dimensional feature matrix of the skeletal key point to the fifth transform neural network to obtain a target two-dimensional feature matrix corresponding to the skeletal key point;

generating the second target skeletal feature matrix based on the target two-dimensional feature matrices respectively corresponding to all skeletal key points;

for each contour key point, performing concatenation processing on a two-dimensional feature matrix corresponding to the contour key point and each shift feature matrix corresponding to the contour key point to obtain a concatenated two-dimensional feature matrix of the contour key point;

inputting the concatenated two-dimensional feature matrix of the contour key point to the fifth transform neural network to obtain a target two-dimensional feature matrix corresponding to the contour key point; and

generating the second target contour feature matrix based on the target two-dimensional feature matrices respectively corresponding to all contour key points.

30. The human detection apparatus of any one of claims 16-29, wherein a human detection function of the human detection apparatus is realized through a human detection model, and the human detection model comprises the first feature extraction network and/or the feature fusion neural network; and

wherein the human detection model is obtained by training through sample images in a training sample set, the sample images being tagged with practical position information of the skeletal key points of the human skeletal structure and practical position information of the contour key points of the human contour.

31. A computer device, comprising a processor, a non-transitory storage medium and a bus, wherein the non-transitory storage medium stores machine-readable instructions executable for the processor; under the condition that the computer device runs, the processor communicates with the non-transitory storage medium through the bus; and the machine-readable instructions are executed by the processor to execute the operations of the method of any one of claims 1-15.

32. A computer-readable storage medium, in which computer programs is stored, wherein the computer programs are operated by a processor to execute the operations of the method of any one of claims 1-15.

S101

An image to be detected is acquired

S102

Position information of skeletal key points configured to represent a human skeletal structure and position information of contour key points configured to represent a human contour are determined based on the image to be detected

S103

A human detection result is generated based on the position information of the skeletal key points and the position information of the contour key points

**FIG. 1**

Skeletal key
point

Main contour
key point

**FIG. 2a**

Main contour
key point

Auxiliary contour
key point

**FIG. 2b**

Main contour
key point

Auxiliary
contour key point

**FIG. 2c**

FIG. 2d

LS1

First skeletal feature extraction network

Common feature extraction network

Image to be detected

Basic feature matrix

Convolutional layer → Convolutional layer → ...... → First target convolutional layer → Convolutional layer

First skeletal feature matrix

Second skeletal feature matrix

Concatenation processing

First target skeletal feature matrix

First contour feature extraction network

Basic feature matrix

Convolutional layer → Convolutional layer → ...... → Second target convolutional layer → Convolutional layer

First contour feature matrix

Second contour feature matrix

Concatenation processing

First target contour feature matrix

LC1

**FIG. 3**

Convolution processing is performed on the image to be detected by use of the common feature extraction network to obtain a basic feature matrix including the skeletal feature and the contour feature ⌐S401

Convolution processing is performed on the basic feature matrix by use of the first skeletal feature extraction network to obtain a first skeletal feature matrix, a second skeletal feature matrix is acquired from a first target convolutional layer in the first skeletal feature extraction network, and the first target skeletal feature matrix is obtained based on the first skeletal feature matrix and the second skeletal feature matrix ⌐S402

Convolution processing is performed on the basic feature matrix by use of the first contour feature extraction network to obtain a first contour feature matrix, a second contour feature matrix is acquired from a second target convolutional layer in the first contour feature extraction network, and the first target contour feature matrix is obtained based on the first contour feature matrix and the second contour feature matrix ⌐S403

**FIG. 4**

**FIG. 5**

Convolution processing is performed on the first target skeletal feature matrix by use of the first convolutional neural network to obtain a first intermediate skeletal feature matrix — S601

Concatenation processing is performed on the first intermediate contour feature matrix and the first target skeletal feature matrix to obtain a first concatenated feature matrix, and dimension transform is performed on the first concatenated feature matrix by use of the first transform neural network to obtain the second target skeletal feature matrix — S603

Convolution processing is performed on the first target contour feature matrix by use of the second convolutional neural network to obtain a first intermediate contour feature matrix — S602

Concatenation processing is performed on the first intermediate skeletal feature matrix and the first target contour feature matrix to obtain a second concatenated feature matrix, and dimension transform is performed on the second concatenated feature matrix by use of the second transform neural network to obtain the second target contour feature matrix — S604

**FIG. 6**

**FIG. 7**

Directional convolution processing is performed on the first target skeletal feature matrix by use of the first directional convolutional neural network to obtain a first directional skeletal feature matrix, and convolution processing is performed on the first directional skeletal feature matrix by use of the third convolutional neural network to obtain a second intermediate skeletal feature matrix ⟍ S801

Concatenation processing is performed on the second intermediate skeletal feature matrix and the first target contour feature matrix to obtain a fourth concatenated feature matrix, and dimension transform is performed on the fourth concatenated feature matrix by use of the fourth transform neural network to obtain the second target contour feature matrix ⟍ S804

Directional convolution processing is performed on the first target contour feature matrix by use of the second directional convolutional neural network to obtain a first directional contour feature matrix, and convolution processing is performed on the first directional contour feature matrix by use of the fourth convolutional neural network to obtain a second intermediate contour feature matrix ⟍ S802

Concatenation processing is performed on the second intermediate contour feature matrix and the first target skeletal feature matrix to obtain a third concatenated feature matrix, and dimension transform is performed on the third concatenated feature matrix by use of the third transform neural network to obtain the second target skeletal feature matrix ⟍ S803

**FIG. 8**

FIG. 9a

a               b               c

**FIG. 9b**

First
target
skeletal
feature
matrix

First
target
contour
feature
matrix

Concatenation
processing

Fifth
concatenated
feature matrix

Shift estimation
neural network

Shift
information

Shifting processing

LP

Shift feature
matrix

Two-dimensional
feature matrix
corresponding to
skeletal key point

Two-dimensional
feature matrix
corresponding to
contour key point

Concatenation processing

Concatenated
two-dimensional
feature matrix
corresponding to
skeletal key
point

Concatenated
two-dimensional
feature matrix
corresponding to
contour key
point

Fifth transform neural network

Second
target
skeletal
feature
matrix

Second
target
contour
feature
matrix

**FIG. 10**

Concatenation processing is performed on the first target skeletal feature matrix and the first target contour feature matrix to obtain a fifth concatenated feature matrix ⌐ S1101

The fifth concatenated feature matrix is input to the shift estimation neural network, and shift estimation is performed on predetermined multiple key point pairs to obtain shift information of a shift from one key point to the other key point in each key point pair ⌐ S1102

By taking each key point in each key point pair as a present key point, a two-dimensional feature matrix corresponding to the paired other key point is acquired from a three-dimensional feature matrix corresponding to the other key point paired with the present key point ⌐ S1103

Positional shifting is performed on elements in the two-dimensional feature matrix corresponding to the paired other key point according to the shift information of the shift from the paired other key point to the present key point to obtain a shift feature matrix corresponding to the present key point ⌐ S1104

For each skeletal key point, concatenation processing is performed on a two-dimensional feature matrix corresponding to the skeletal key point and each shift feature matrix corresponding to the skeletal key point to obtain a concatenated two-dimensional feature matrix of the skeletal key point, the concatenated two-dimensional feature matrix of the skeletal key point is input to the fifth transform neural network to obtain a target two-dimensional feature matrix corresponding to the skeletal key point, and the second target skeletal feature matrix is generated based on the target two-dimensional feature matrices respectively corresponding to all skeletal key points ⌐ S1105

For each contour key point, concatenation processing is performed on a two-dimensional feature matrix corresponding to the contour key point and each shift feature matrix corresponding to the contour key point to obtain a concatenated two-dimensional feature matrix of the contour key point, and the concatenated two-dimensional feature matrix of the contour key point is input to the fifth transform neural network to obtain a target two-dimensional feature matrix corresponding to the contour key point; and the second target contour feature matrix is generated based on the target two-dimensional feature matrices respectively corresponding to all contour key points ⌐ S1106

FIG. 11

FIG. 12

a                    b

**FIG. 13**

Second skeletal feature extraction network

Second target skeletal feature network → [Convolutional layer] → [Convolutional layer] → ...... → [Third target convolutional layer] → [Convolutional layer] → Third skeletal feature matrix / Fourth skeletal feature matrix → [Concatenation processing] → Fifth target skeletal feature matrix

Second target skeletal feature matrix

Feature fusion result of previous feature fusion → [Convolutional layer] → [Convolutional layer] → ...... → [Fourth target convolutional layer] → [Convolutional layer] → Third contour feature matrix / Fourth contour feature matrix → [Concatenation processing] → Sixth target contour feature matrix

**FIG. 14**

Human detection apparatus

| 151: Acquisition module | 152: Detection module | 153: Generation module |
|---|---|---|

154: Execution module

**FIG. 15**

Computer device

Storage medium 12

121: Memory

122: External memory

Processor 11

13: Bus

**FIG. 16**

## INTERNATIONAL SEARCH REPORT

| International application No. |
| --- |
| **PCT/CN2020/087826** |

### A. CLASSIFICATION OF SUBJECT MATTER

G06K 9/00(2006.01)i;  G06K 9/62(2006.01)i;  G06N 3/04(2006.01)i;  G06N 3/08(2006.01)i

According to International Patent Classification (IPC) or to both national classification and IPC

### B. FIELDS SEARCHED

Minimum documentation searched (classification system followed by classification symbols)

G06K; G06N

Documentation searched other than minimum documentation to the extent that such documents are included in the fields searched

Electronic data base consulted during the international search (name of data base and, where practicable, search terms used)

CNPAT, EPODOC, WPI, CNKI, IEEE: 图像, 检测, 识别, 人体, 动作, 姿态, 轮廓, 骨骼, 特征, 点, 位置, 融合, 神经网络, picture, image, detect, recognise, body, action, gesture, profile, bones, skeleton, character, point, position, fusion, NN, neural, network

### C. DOCUMENTS CONSIDERED TO BE RELEVANT

| Category* | Citation of document, with indication, where appropriate, of the relevant passages | Relevant to claim No. |
| --- | --- | --- |
| PX | CN 110705448 A (BEIJING SENSETIME TECHNOLOGY DEVELOPMENT CO., LTD.) 17 January 2020 (2020-01-17)<br>claims 1-10, description paragraphs [0003]-[0150] | 1-32 |
| X | CN 102831380 A (KONKA GROUP CO., LTD.) 19 December 2012 (2012-12-19)<br>description paragraphs [0007]-[0018], abstract | 1-6, 16-21, 31-32 |
| X | CN 103679175 A (UNIVERSITY OF ELECTRONIC SCIENCE AND TECHNOLOGY OF CHINA) 26 March 2014 (2014-03-26)<br>description, paragraphs [0004]-[0036] | 1-6, 16-21, 31-32 |
| A | CN 110197117 A (BEIJING QIYI CENTURY SCIENCE & TECHNOLOGY CO., LTD.) 03 September 2019 (2019-09-03)<br>entire document | 1-32 |
| A | CN 110084161 A (SUN YAT-SEN UNIVERSITY) 02 August 2019 (2019-08-02)<br>entire document | 1-32 |
| A | US 2012327194 A1 (SHIRATORI, Takaaki et al.) 27 December 2012 (2012-12-27)<br>entire document | 1-32 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 July 2020** | **30 July 2020** |

| Name and mailing address of the ISA/CN | Authorized officer |
| --- | --- |
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/087826**

| Patent document cited in search report | | | Publication date (day/month/year) | Patent family member(s) | Publication date (day/month/year) |
|---|---|---|---|---|---|
| CN | 110705448 | A | 17 January 2020 | None | |
| CN | 102831380 | A | 19 December 2012 | None | |
| CN | 103679175 | A | 26 March 2014 | None | |
| CN | 110197117 | A | 03 September 2019 | None | |
| CN | 110084161 | A | 02 August 2019 | None | |
| US | 2012327194 | A1 | 27 December 2012 | None | |

Form PCT/ISA/210 (patent family annex) (January 2015)